# EUROPEAN PATENT APPLICATION

(11) **EP 4 848 695 A1**
(43) Date of publication of application: **02.12.2026**
(21) Application number: 25807944.1
(22) Date of filing: 20.03.2025
(51) Int. Cl.: H04L 67/12, H04L 67/306, H04L 67/303, H04W 76/14, G06K 19/06, H04W 4/70, G16Y 10/80, G16Y 20/40, H04L 12/28, H04L 101/375

(54) **ELECTRONIC DEVICE FOR TRANSFERRING OWNERSHIP OF INTERNET-OF-THINGS DEVICE, AND OPERATING METHOD THEREOF**

(30) Priority: 24.05.2024 KR 20240068070; 19.06.2024 KR 20240079497
(71) Applicant: Samsung Electronics Co., Ltd., Suwon-si, Gyeonggi-do 16677 (KR)
(72) Inventor: KIM, Namjin, Suwon-si Gyeonggi-do 16677 (KR)
(74) Representative: Gulde & Partner
(86) International application number: PCT/KR2025/003598
(87) International publication number: WO 2025/244261

(57) **Abstract**

Disclosed is an electronic device comprising a memory for storing instructions, a communication circuit, and at least one processor. The instructions can instruct a second electronic device to: receive an ownership transfer request message requesting the ownership transfer of an IoT device, registered in a server, from a first user to a second user; receive a user input agreeing to the transfer of ownership of the IoT device; on the basis of the user input, transmit, to the server, a request message for requesting the transfer of ownership of the IoT device; after transmitting the request message, receive, from the server, ownership transfer information required to process the transfer of ownership of the IoT device; establish a D2D connection with the IoT device on the basis of the ownership transfer information; and transmit, to the IoT device through the D2D connection, network connection information to be used for the IoT device to connect to the server.

## Description

### [Technical Field]

The disclosure relates to an electronic device for transferring ownership of an internet of things (IoT) device and an operating method thereof.

### [Background Art]

Various services and additional functions provided through a user terminal, e.g., an electronic device such as a smart phone, are gradually increasing. To enhance the utility of such an electronic device and satisfy the needs of various users, communication service providers or electronic device manufacturers are competitively developing electronic devices that provide various functions. Accordingly, various functions provided through an electronic device are gradually becoming more advanced.

As wireless communication technology develops, devices utilizing artificial intelligence (AI) are being widely introduced. For example, home appliances that are connected to a network using internet of things (IoT) technology may utilize artificial intelligence. The IoT technology may provide an intelligent internet technology service that creates new value for human life by collecting and analyzing data generated from devices. Through the convergence and combination of existing internet technology and various industries, the IoT technology may be applied to fields such as smart home, smart building, smart city, smart car, and smart appliances.

Meanwhile, various home appliances for user convenience are provided in a home. Various services for more conveniently operating or controlling home appliances by utilizing the IoT technology have been proposed. Home network technology may provide various services through a home network to users in a home. For example, a user may control various controlled devices constituting a home network (e.g., home appliances to which the IoT technology is applied) using a personal electronic device (e.g., a smart phone). The user may wish to be provided with more various services to control the controlled devices. Accordingly, the development of various technologies for managing the controlled devices by reflecting the user's intention is required.

### [Detailed Description of the Invention]

### [Technical Solution]

Embodiments of the disclosure may provide an internet of things (IoT) service.

Embodiments of the disclosure relate to an electronic device for transferring ownership of an IoT device and an operating method thereof.

Embodiments of the disclosure relate to an electronic device for delivering new network connection information to a pre-registered IoT device and an operating method thereof.

The technical problems to be achieved in the disclosure are not limited to the technical problems mentioned above, and other technical problems not mentioned may be clearly understood by those of ordinary skill in the art to which the present invention pertains from the following description.

A second electronic device according to an embodiment may include memory storing instructions, a communication circuit, and at least one processor operatively connected to the memory and the communication circuit. The instructions may, when executed by the at least one processor, cause the second electronic device to receive, via the communication circuit, an ownership transfer request message requesting to transfer ownership of an internet of things (IoT) device registered in a server from a first user to a second user. The instructions may, when executed by the at least one processor, cause the second electronic device to receive a user input consenting to the ownership transfer of the IoT device. The instructions may, when executed by the at least one processor, cause the second electronic device to transmit, via the communication circuit, a request message for requesting the ownership transfer of the IoT device to the server based on the user input. The instructions may, when executed by the at least one processor, cause the second electronic device to receive, via the communication circuit, ownership transfer information necessary for processing the ownership transfer of the IoT device from the server after transmitting the request message. The instructions may, when executed by the at least one processor, cause the second electronic device to establish a device-to-device (D2D) connection with the IoT device via the communication circuit based on the ownership transfer information. The instructions may, when executed by the at least one processor, cause the second electronic device to transmit, to the IoT device via the D2D connection, network connection information for being used by the IoT device to connect with the server.

A first electronic device according to an embodiment of the disclosure may include memory storing instructions, a communication circuit, and at least one processor operatively connected to the memory and the communication circuit. The instructions may, when executed by the at least one processor, cause the first electronic device to receive a user input requesting to transfer ownership of a first IoT device among one or more IoT devices registered in a server for a first user to a second user. The instructions may, when executed by the at least one processor, cause the first electronic device to transmit, via the communication circuit, an ownership transfer notice message including user information of the second user to the server. The instructions may, when executed by the at least one processor, cause the first electronic device to transmit, via the communication circuit, an ownership transfer request message including ownership information indicating a right to receive the ownership of the first IoT device from the first user, to a second electronic device related to the second user.

A method by a second electronic device according to an embodiment of the disclosure may include an operation of receiving an ownership transfer request message requesting to transfer ownership of an internet of things (IoT) device registered in a server from a first user to a second user. The method may include an operation of receiving a user input consenting to the ownership transfer of the IoT device. The method may include an operation of transmitting, to the server, a request message for requesting the ownership transfer of the IoT device based on the user input. The method may include an operation of receiving, from the server, ownership transfer information necessary for processing the ownership transfer of the IoT device after transmitting the request message. The method may include an operation of establishing a device-to-device (D2D) connection with the IoT device based on the ownership transfer information. The method may include an operation of transmitting, to the IoT device via the D2D connection, network connection information for being used by the IoT device to connect with the server.

A method by a first electronic device according to an embodiment of the disclosure may include an operation of receiving a user input requesting to transfer ownership of a first IoT device among one or more IoT devices registered in a server for a first user to a second user. The method may include an operation of transmitting, to the server, an ownership transfer notice message including user information of the second user. The method may include an operation of transmitting, to a second electronic device related to the second user, an ownership transfer request message including ownership information indicating a right to receive the ownership of the first IoT device from the first user.

### [Brief Description of Drawings]

The above and other aspects, features, and advantages of certain embodiments of the disclosure will be more apparent from the following detailed description taken in conjunction with the accompanying drawings.
FIG. 1 illustrates an internet of things (IoT) system according to various embodiments.
FIG. 2 is a block diagram illustrating an electronic device in a network environment according to various embodiments.
FIG. 3 is a view illustrating an IoT network according to an embodiment of the disclosure.
FIG. 4 is a view illustrating an IoT client application according to an embodiment of the disclosure.
FIG. 5 is a view illustrating ownership transfer of an IoT device according to an embodiment of the disclosure.
FIG. 6 is a flowchart illustrating a procedure for requesting ownership transfer according to an embodiment of the disclosure.
FIG. 7 is a sequence diagram illustrating an ownership transfer procedure using an ownership transfer request message according to an embodiment of the disclosure.
FIG. 8 is a flowchart illustrating a procedure for processing an ownership transfer request message according to an embodiment of the disclosure.
FIG. 9 is a sequence diagram illustrating an ownership transfer procedure using a QR code according to an embodiment of the disclosure.
FIG. 10 is a flowchart illustrating a procedure for processing ownership transfer based on a QR code according to an embodiment of the disclosure.
FIG. 11 is a sequence diagram illustrating a procedure for processing ownership transfer according to an embodiment of the disclosure.
FIG. 12 is a sequence diagram illustrating a procedure for establishing a Wi-Fi connection according to an embodiment of the disclosure.
FIG. 13 is a sequence diagram illustrating a procedure for establishing a Bluetooth low energy (BLE) connection according to an embodiment of the disclosure.
FIG. 14 is a flowchart illustrating a procedure for processing ownership transfer according to an embodiment of the disclosure.
FIGS. 15A and 15B illustrate a user interface (UI) including a QR code for requesting ownership transfer according to an embodiment of the disclosure.
FIGS. 16A, 16B, and 16C illustrate a UI for transmitting an ownership transfer request according to an embodiment of the disclosure.
FIGS. 17A and 17B illustrate a UI including a processing procedure of ownership transfer according to an embodiment of the disclosure.

### [Mode for Carrying out the Invention]

The terms used in the disclosure are only used to describe specific embodiments, and may not be intended to limit the scope of other embodiments. A singular expression may include a plural expression unless the context clearly indicates otherwise. Terms used herein, including technical or scientific terms, may have the same meaning as commonly understood by those of ordinary skill in the technical field described in the disclosure. Among the terms used in the disclosure, terms defined in a general dictionary may be interpreted as having the same or similar meaning as the meaning in the context of the related art, and unless clearly defined in the disclosure, they are not interpreted in an ideal or excessively formal meaning. In some cases, even the terms defined in the disclosure may not be interpreted to exclude the embodiments of the disclosure.

In the embodiments of the disclosure described below, a hardware-based approach is described as an example. However, the embodiments of the disclosure include technology using both hardware and software, and the description of the embodiments of the disclosure does not exclude a software-based approach.

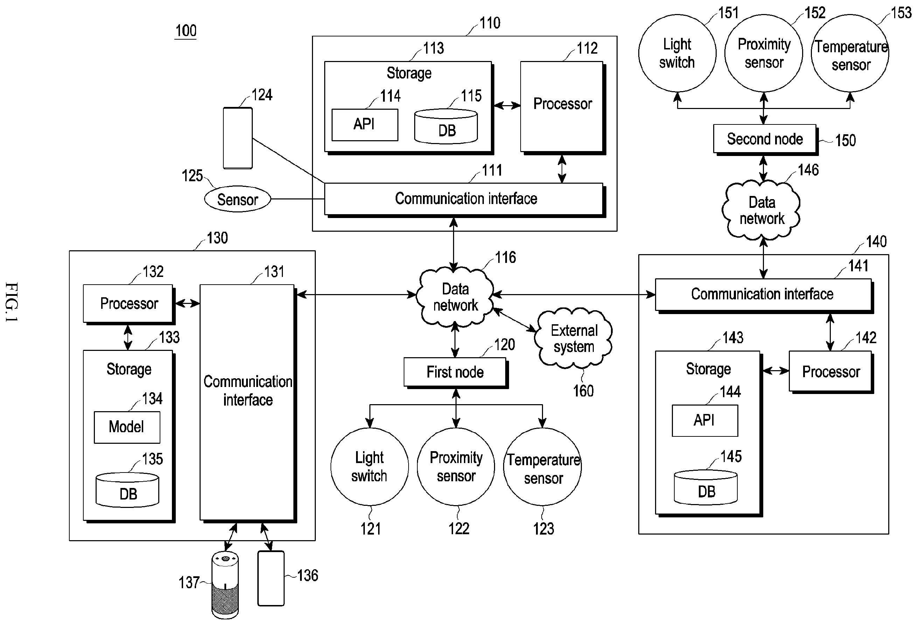

FIG. 1 illustrates an internet of things (IoT) system 100 according to various embodiments. Meanwhile, at least some of the components of FIG. 1 may be omitted, and the IoT system may be implemented to further include components not shown.

Referring to FIG. 1, an IoT system 100 according to an embodiment includes a plurality of electronic devices connectable to a data network 116 or 146. For example, the IoT system 100 may include at least one of a first IoT server 110, a first node 120, a voice assistance server 130, a second IoT server 140, a second node 150, or devices 121, 122, 123, 124, 125, 136, 137, 151, 152, 153.

According to an embodiment, the first IoT server 110 may include at least one of a communication interface 111, a processor 112, or a storage unit (e.g., memory 113). The second IoT server 140 may include at least one of a communication interface 141, a processor 142, or a storage unit 143. The "IoT server" in the present document may remotely control and/or monitor one or more devices (e.g., devices 121, 122, 123, 124, 125, 151, 152, 153), for example, based on a data network (e.g., data network 116 or data network 146), through a relay device (e.g., first node 120 or second node 150), or directly, without a relay device. The "device" herein is, for example, a sensor, a home appliance, an office electronic device, or a device for performing a process disposed (or located) in a local environment such as a home, an office, a factory, a building, an outdoor point, or another type of premises, and there is no limit to the kind thereof. A device that receives a control command and performs an operation corresponding to the control command may be referred to as a "target device." The IoT server may also be referred to as a central server in that it selects a target device among a plurality of devices and provides a control command.

According to an embodiment, the first IoT server 110 may perform communication with the devices 121, 122, 123 via the data network 116. The data network 116 may refer to a network for long-distance communication such as the internet or a computer network (e.g., a LAN or WAN), or may include a cellular network.

According to an embodiment, the first IoT server 110 may be connected to the data network 116 via the communication interface 111. The communication interface 111 may include a communication device (or a communication module) for supporting communication of the data network 116, and may be integrated into one component (e.g., a single chip) or implemented as a plurality of separate components (e.g., multiple chips). The first IoT server 110 may perform communication with the devices 121, 122, 123 through the first node 120. The first node 120 may receive data from the first IoT server 110 through the data network 116, and transmit the received data to at least some of the devices 121, 122, 123. Alternatively, the first node 120 may receive data from at least some of the devices 121, 122, 123, and transmit the received data to the first IoT server 110 through the data network 116. The first node 120 may function as a bridge between the data network 116 and the devices 121, 122, 123. Meanwhile, although only one first node 120 is illustrated in FIG. 1, this is merely exemplary, and there is no limit to the number thereof.

The "node" in the present document may be an edge computing system, or may be a hub device. According to an embodiment, the first node 120 may support wired and/or wireless communication of the data network 116, and may also support wired and/or wireless communication with the devices 121, 122, 123. For example, the first node 120 may be connected to the devices 121, 122, 123 via a short-range communication network such as at least one of Bluetooth, Wi-Fi, Wi-Fi direct, Z-wave, Zig-bee, INSETEON, X10, or infrared data association (IrDA), but the kind of communication is not limited. The first node 120 may be disposed (or located) within an environment such as, for example, a home, an office, a factory, a building, an outdoor point, or another type of premises. Accordingly, the devices 121, 122, 123 may be monitored and/or controlled by the service provided by the first IoT server 110, and the devices 121, 122, 123 may not be required to have the capability of complete network communication (e.g., internet communication) for direct connection to the first IoT server 110. The devices 121, 122, 123 are illustrated as being implemented as electronic devices within a home environment such as, e.g., a light switch, a proximity sensor, a temperature sensor, but this is exemplary and not limited.

According to an embodiment, the first IoT server 110 may also support direct communication with the devices 124, 125. Herein, "direct communication" may refer to communication that does not go through a relay device such as, e.g., the first node 120, and may refer to, e.g., communication via a cellular communication network and/or a data network.

According to an embodiment, the first IoT server 110 may transmit a control command to at least some of the devices 121, 122, 123, 124, 125. Herein, a "control command" may refer to data that causes a controllable device to perform a specific operation, and the specific operation is an operation performed by the device and may include outputting information, sensing information, reporting information, and managing information (e.g., deletion or generation), and there is no limit to the kind thereof. For example, the processor 112 may obtain information (or a request) for generating a control command from the outside (e.g., at least some of the voice assistance server 130, the second IoT server 140, the external system 160, or the devices 121, 122, 123, 124, 125), and generate a control command based on the obtained information. Alternatively, the processor 112 may generate a control command based on the monitoring result of at least some of the devices 121, 122, 123, 124, 125 satisfying a specified condition. The processor 112 may control the communication interface 111 to transmit the control command to the target device.

According to an embodiment, the processor 112, the processor 132, or the processor 142 may be implemented as a combination of one or more of a general-purpose processor such as a central processing unit (CPU), a digital signal processor (DSP), an application processor (AP), a communication processor (CP), a graphics-dedicated processor such as a graphical processing unit (GPU) or a vision processing unit (VPU), or an artificial intelligence-dedicated processor such as a neural processing unit (NPU). Those skilled in the art will understand that the above-mentioned processing unit is merely exemplary, and the processor 112 is not limited as long as it is a computing means capable of executing, for example, instructions stored in the memory 113 and outputting the executed result.

According to an embodiment, the processor 112 may configure a web-based interface based on an API 114, or expose resources managed by the first IoT server 110 to the outside. The web-based interface may support, for example, communication between the first IoT server 110 and an external web service. The processor 112 may, for example, allow the external system 160 to control and/or access the devices 121, 122, 123. The external system 160 may be, for example, an independent system that is not related to or a part of the system 100. The external system 160 may be, for example, an external server or a website. However, security is required for access from the external system 160 to the devices 121, 122, 123 or the resources of the first IoT server 110. According to an embodiment, the processor 112 may expose to the outside, for the automation application, an API endpoint (e.g., a universal resource locator (URL)) based on the API 114. As described above, the first IoT server 110 may deliver the control command to the target device among the devices 121, 122, 123. Meanwhile, the description of the communication interface 141, the processor 142, the API 144 of the storage unit 143, and the database 145 of the second IoT server 140 may be substantially the same as the description of the communication interface 111, the processor 112, the API 114 of the storage unit 113, and the database 115 of the first IoT server 110. Further, the description of the second node 150 may be substantially the same as the description of the first node 120. The second IoT server 140 may deliver a control command to a target device among the devices 151, 152, 153. The first IoT server 110 and the second IoT server 140 may be operated by the same service provider in one embodiment, but may be operated by different service providers in another embodiment.

According to an embodiment, the voice assistance server 130 may transmit/receive data to/from the first IoT server 110 via the data network 116. The voice assistance server 130 according to an embodiment may include at least one of a communication interface 131, a processor 132, or a storage unit 133. The communication interface 131 may perform communication with a smart phone 136 or an AI speaker 137 via a data network (not shown) and/or a cellular network (not shown). The smart phone 136 or the AI speaker 137 may include a microphone, and may obtain a user voice, convert it into a voice signal, and transmit the voice signal to the voice assistance server 130.

The processor 132 may receive the voice signal from the smart phone 136 or the AI speaker 137 via the communication interface 131. The processor 132 may process the received voice signal based on the stored model 134. The processor 132 may generate (or identify) a control command using the processing result based on the information stored in the database 135. According to an embodiment, the storage units 113, 133, 143 may include at least one type of non-transitory storage medium among a flash memory type, a hard disk type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), a magnetic memory, a magnetic disk, or an optical disk, and there is no limit to the kind thereof.

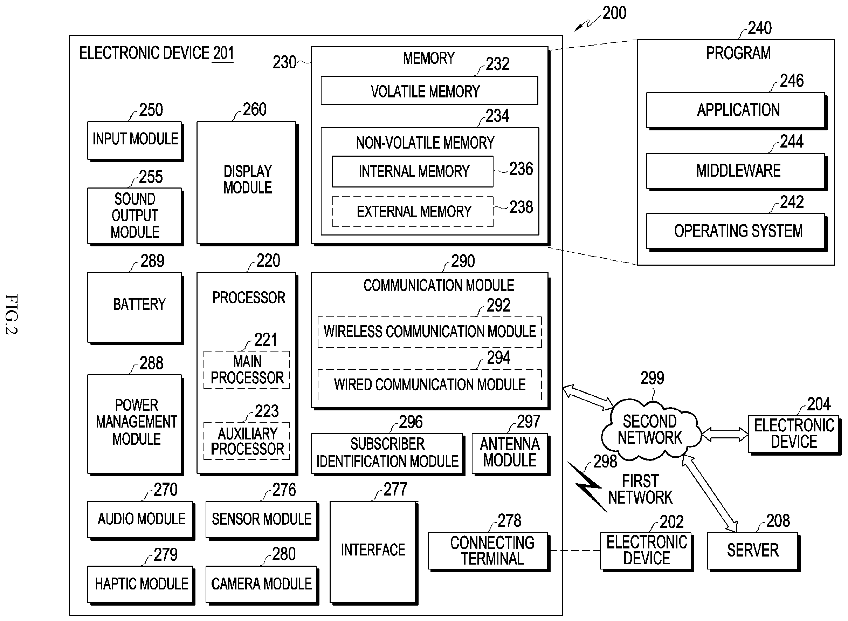

FIG. 2 is a block diagram illustrating an electronic device 201 within a network environment 200 according to various embodiments.

Referring to FIG. 2, in the network environment 200, the electronic device 201 may communicate with an electronic device 202 through a first network 298 (e.g., a short-range wireless communication network), or may communicate with at least one of an electronic device 204 or a server 208 through a second network 299 (e.g., a long-range wireless communication network). According to an embodiment, the electronic device 201 may communicate with the electronic device 204 through the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module 296, or an antenna module 297. In some embodiments, in the electronic device 201, at least one of these components (e.g., the connecting terminal 278) may be omitted, or one or more other components may be added. In some embodiments, some of these components (e.g., the sensor module 276, the camera module 280, or the antenna module 297) may be integrated into a single component (e.g., the display module 260).

The processor 220 may, for example, execute software (e.g., the program 240) to control at least one other component (e.g., a hardware or software component) of the electronic device 201 connected to the processor 220, and may perform various data processing or computations. According to an embodiment, as at least part of the data processing or computation, the processor 220 may store instructions or data received from another component (e.g., the sensor module 276 or the communication module 290) in volatile memory 232, process the instructions or data stored in the volatile memory 232, and store result data in non-volatile memory 234. According to an embodiment, the processor 220 may include a main processor 221 (e.g., a central processing unit or an application processor) or an auxiliary processor 223 (e.g., a graphics processing unit, a neural processing unit (NPU), an image signal processor, a sensor hub processor, or a communication processor) that is operable independently of, or together with, the main processor 221. For example, when the electronic device 201 includes the main processor 221 and the auxiliary processor 223, the auxiliary processor 223 may be configured to use less power than the main processor 221 or to be specialized for a specified function. The auxiliary processor 223 may be implemented separately from, or as a part of, the main processor 221.

The auxiliary processor 223 may, for example, control at least some of functions or states related to at least one component (e.g., the display module 260, the sensor module 276, or the communication module 290) among the components of the electronic device 201 in place of the main processor 221 while the main processor 221 is in an inactive (e.g., sleep) state, or together with the main processor 221 while the main processor 221 is in an active (e.g., application execution) state. According to an embodiment, the auxiliary processor 223 (e.g., the image signal processor or the communication processor) may be implemented as a part of another functionally related component (e.g., the camera module 280 or the communication module 290). According to an embodiment, the auxiliary processor 223 (e.g., the neural processing unit) may include a hardware structure specialized for processing an artificial intelligence model. The artificial intelligence model may be generated through machine learning. Such learning may, for example, be performed by the electronic device 201 itself in which the artificial intelligence model is performed, or may be performed through a separate server (e.g., the server 208). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 230 may store various data used by at least one component (e.g., the processor 220 or the sensor module 276) of the electronic device 201. The data may include, for example, software (e.g., the program 240), and input data or output data for instructions related thereto. The memory 230 may include the volatile memory 232 or the non-volatile memory 234.

The program 240 may be stored as software in the memory 230, and may include, for example, an operating system 242, middleware 244, or an application 246.

The input module 250 may receive instructions or data to be used by a component (e.g., the processor 220) of the electronic device 201 from the outside (e.g., a user) of the electronic device 201. The input module 250 may include, for example, a microphone, a mouse, a keyboard, a key (e.g., a button), or a digital pen (e.g., a stylus pen).

The sound output module 255 may output a sound signal to the outside of the electronic device 201. The sound output module 255 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 260 may visually provide information to the outside (e.g., a user) of the electronic device 201. The display module 260 may include, for example, a display, a hologram device, or a projector, and a control circuit for controlling the corresponding device. According to an embodiment, the display module 260 may include a touch sensor configured to sense a touch, or a pressure sensor configured to measure the intensity of a force generated by the touch.

The audio module 270 may convert sound into an electrical signal, or vice versa, i.e., may convert an electrical signal into sound. According to an embodiment, the audio module 270 may acquire sound through the input module 250, or may output sound through the sound output module 255 or an external electronic device (e.g., the electronic device 202) (e.g., a speaker or headphones) connected directly or wirelessly to the electronic device 201.

The sensor module 276 may sense an operating state (e.g., power or temperature) of the electronic device 201 or an external environmental state (e.g., a user state), and may generate an electrical signal or data value corresponding to the sensed state. According to an embodiment, the sensor module 276 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols that may be used for the electronic device 201 to be connected directly or wirelessly to an external electronic device (e.g., the electronic device 202). According to an embodiment, the interface 277 may include, for example, a high definition multimedia interface (HDMI), a universal serial bus (USB) interface, an SD card interface, or an audio interface.

The connecting terminal 278 may include a connector through which the electronic device 201 may be physically connected to an external electronic device (e.g., the electronic device 202). According to an embodiment, the connecting terminal 278 may include, for example, an HDMI connector, a USB connector, an SD card connector, or an audio connector (e.g., a headphone connector).

The haptic module 279 may convert an electrical signal into a mechanical stimulus (e.g., vibration or movement) or an electrical stimulus that a user may perceive through a tactile or kinesthetic sense. According to an embodiment, the haptic module 279 may include, for example, a motor, a piezoelectric element, or an electrical stimulation device.

The camera module 280 may capture still images and videos. According to an embodiment, the camera module 280 may include one or more lenses, image sensors, image signal processors, or flashes.

The power management module 288 may manage power supplied to the electronic device 201. According to an embodiment, the power management module 288 may be implemented, for example, as at least a part of a power management integrated circuit (PMIC).

The battery 289 may supply power to at least one component of the electronic device 201. According to an embodiment, the battery 289 may include, for example, a non-rechargeable primary battery, a rechargeable secondary battery, or a fuel cell.

The communication module 290 may support establishment of a direct (e.g., wired) communication channel or a wireless communication channel between the electronic device 201 and an external electronic device (e.g., the electronic device 202, the electronic device 204, or the server 208), and performance of communication through the established communication channel. The communication module 290 may include one or more communication processors that operate independently of the processor 220 (e.g., an application processor) and support direct (e.g., wired) communication or wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module, or a power line communication module). A corresponding communication module among these communication modules may communicate with an external electronic device 204 through a first network 298 (e.g., a short-range communication network such as Bluetooth, wireless fidelity (Wi-Fi) direct, or infrared data association (IrDA)) or a second network 299 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 292 may identify or authenticate the electronic device 201 within a communication network, such as the first network 298 or the second network 299, by using subscriber information (e.g., an international mobile subscriber identifier (IMSI)) stored in the subscriber identification module 296.

The wireless communication module 292 may support a 5G network beyond a 4G network, and a next-generation communication technology, for example, a new radio access technology (NR). The NR access technology may support high-speed transmission of highcapacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 292 may, for example, support a high-frequency band (e.g., an mmWave band) to achieve a high data transmission rate. The wireless communication module 292 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 297 may transmit a signal or power to the outside (e.g., an external electronic device) or receive it from the outside. According to an embodiment, the antenna module 297 may include an antenna including a radiator made of a conductor or a conductive pattern formed on a substrate (e.g., a PCB). According to an embodiment, the antenna module 297 may include a plurality of antennas (e.g., an array antenna). In such a case, at least one antenna suitable for a communication scheme used in a communication network, such as the first network 298 or the second network 299, may be selected from the plurality of antennas, for example, by the communication module 290. A signal or power may be transmitted or received between the communication module 290 and an external electronic device through the at least one selected antenna. According to some embodiments, in addition to the radiator, another component (e.g., a radio frequency integrated circuit (RFIC)) may additionally be formed as a part of the antenna module 297.

According to various embodiments, the antenna module 297 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 201 and the external electronic device 204 through the server 208 connected to the second network 299. Each of the external electronic devices 202 or 204 may be a device of the same type as, or a different type from, the electronic device 201. According to an embodiment, all or some of the operations executed in the electronic device 201 may be executed in one or more external electronic devices among the external electronic devices 202, 204, or 208. For example, when the electronic device 201 needs to perform a certain function or service automatically, or in response to a request from a user or another device, the electronic device 201 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 201. The electronic device 201 may provide the result, as it is or after additional processing, as at least a part of a response to the request. For this purpose, for example, cloud computing, distributed computing, mobile edge computing (MEC), or client-server computing technology may be used. The electronic device 201 may, for example, provide ultra-low-latency services using distributed computing or mobile edge computing. In another embodiment, the external electronic device 204 may include an Internet of things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology and IoT-related technology.

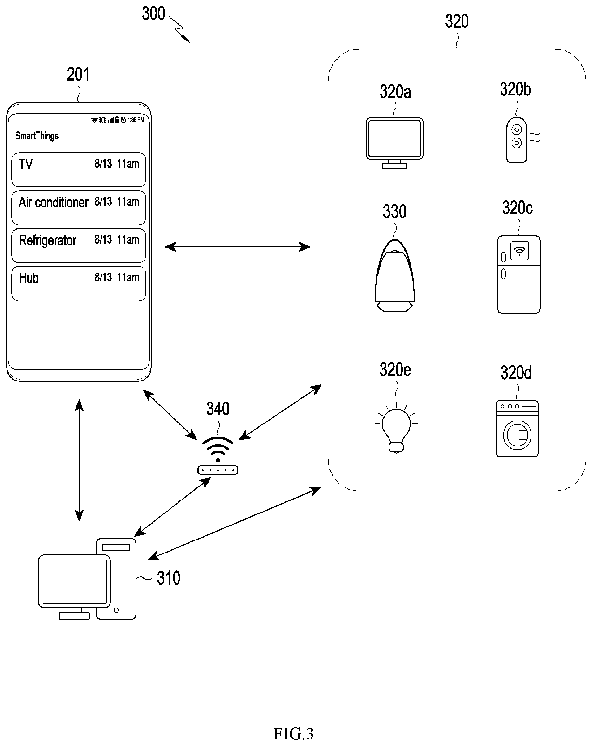

FIG. 3 is a view illustrating an IoT network according to an embodiment of the disclosure.

Referring to FIG. 3, a network 300 may include a server 310 operating as an IoT cloud, an electronic device (e.g., the electronic device 201) capable of communicating with the server 310 via the internet, and at least one IoT device 320 (e.g., controlled devices 320a, 320b, 320c, 320d, 320e and a hub device 330) that supports IoT technology and is capable of communicating with the server 310 (e.g., a cloud server) via the internet (e.g., a Wi-Fi access point (AP) 340). In an embodiment, the hub device 330 may support a connection between the controlled devices 320a, 320b, 320c, 320d, 320e and the electronic device 201 and/or a connection between the controlled devices 320a, 320b, 320c, 320d, 320e and the server 310, and/or may manage the controlled devices 320a, 320b, 320c, 320d, 320e. In an embodiment, the electronic device 201 may communicate with the controlled devices 320a, 320b, 320c, 320d, 320e through the hub device 330, through the server 310, through the internet using long-range wireless communication (e.g., the second network 299), or directly using short-range wireless communication (e.g., the first network 298).

In an embodiment, the controlled devices 320a, 320b, 320c, 320d, 320e may be controlled (e.g., state report and/or execution of a specific function) by a remote command (e.g., a control command of the electronic device 201), and may include, for example, at least one of a television, an air conditioner, a refrigerator, a washing machine, a lighting device, a security camera, a sensor, or a window treatment.

In an embodiment, at least one of the controlled devices 320a, 320b, 320c, 320d, 320e may communicate with the electronic device 201 through the hub device 330, communicate with the electronic device 201 through the server 310, and/or communicate with the electronic device 201 directly (e.g., without going through the server 310 or the hub device 330). In an embodiment, at least one of the controlled devices 320a, 320b, 320c, 320d, 320e may be configured to communicate with the electronic device 201 through the internet using long-range wireless communication (e.g., the second network 299) or using short-range wireless communication (e.g., the first network 298). In an embodiment, at least one of the controlled devices 320a, 320b, 320c, 320d, 320e may be configured to communicate with the server 310 through the internet using long-range wireless communication (e.g., the second network 299) or using short-range wireless communication (e.g., the first network 298). In an embodiment, at least one of the controlled devices 320a, 320b, 320c, 320d, 320e may access the internet via the Wi-Fi AP 340.

In an embodiment, the electronic device 201 may be a personal electronic device such as, e.g., a smart phone, a tablet, or a wearable device, or an electronic device having a display and a user interface such as a television or a control console. The electronic device 201 may discover an IoT device 320 and execute an onboarding procedure (e.g., a registration procedure) for registering the discovered IoT device 320 with the server 310. The IoT device 320 may be registered with the server 310 to be associated with a user account. The electronic device 201 may manage and control the IoT device 320 registered with the server 310 using the user account.

In an embodiment, the electronic device 201 may identify the state of the IoT device 320 that the user will use for the IoT control service, or control the IoT device 320 (e.g., transmit a control command instructing to execute a specific function). In an embodiment, the electronic device 201 may be an owner device that has the ownership of the IoT device 320. In an embodiment, although not shown, at least one member device including at least some functions and/or authorities of the electronic device 201 may be included in the network 300. In an embodiment, the member device may not execute the onboarding procedure for the IoT device 320, but may execute a function of identifying or controlling the state of the IoT device 320 registered with the server 310.

In an embodiment, the hub device 330 is an electronic device that operates an IoT control service, and may be a server or gateway disposed within a building (a home or a hotel), or a remote server disposed outside of a building. In an embodiment, the hub device 330 may be a home appliance such as a smart phone, a tablet, a personal computer (PC), or a TV having a hub function. The hub device 330 may be registered with the server 310 through the electronic device 201 similarly to the controlled devices 320a, 320b, 320c, 320d, 320e.

In an embodiment, the electronic device 201 may include a client application for an IoT control service that processes a procedure of registering the IoT device 320 with a cloud server (e.g., the server 310), and enables the registered IoT device 320 to be remotely controlled. The electronic device may include various devices and platforms such as a mobile phone, a television (TV), a family hub, or a smart watch. The IoT device 320 may have a connection type of hub-connected, direct-connected, or cloud-to-cloud connected. The hub-connected type may mean that the IoT device 320 is connected with the hub device 330 through short-range wireless communication such as Zigbee, Z-wave, or Wi-Fi, and is connected with the server 310 through the hub device 330. The direct-connected type may mean that the IoT device 320 directly connects to the Wi-Fi AP 340 and is connected with the server 310 through the Wi-Fi AP 340. The cloud-connected type may mean that the IoT device 320 registered with a third-party cloud is connected to the server 310 through an application programmable interface (API).

In an embodiment, the electronic device 201 may perform an operation of registering the IoT device 320 with the server 310 (e.g., an onboarding procedure) through the client application. When the connection with the server 310 is disconnected after the IoT device 320 is onboarded, the IoT device 320 may perform a specified operation for finding an internet connection in an offline state (e.g., a Wi-Fi scan or Bluetooth low energy (BLE) advertising).

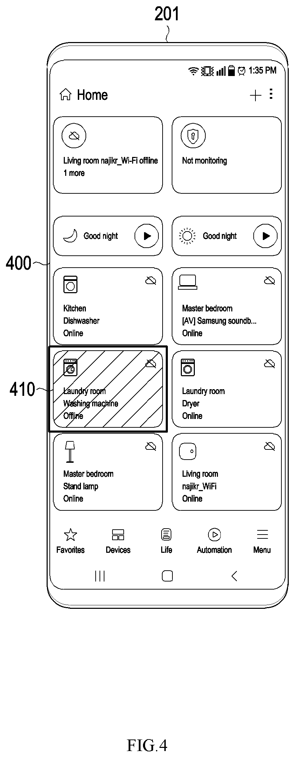

FIG. 4 is a view illustrating an IoT client application according to an embodiment.

Referring to FIG. 4, the electronic device 201 may execute a client application for an IoT control service and display an execution screen 400 provided by the client application through a display module (e.g., the display module 260). The execution screen 400 may include states (e.g., at least one of an image, a location, a name, or a connection state) of at least one external electronic device (e.g., the IoT device 320) registered for a user account. The connection state may include online or offline. When the IoT device 320 is normally connected with the server 310, the connection state may indicate an online state. When the IoT device 320 is not normally connected with the server 310, the connection state may indicate an offline state. In an embodiment, the IoT device 320 may become in an offline state based on the disconnection of the connection with the Wi-Fi AP 340, the hub device 330, and/or the electronic device 201.

In an embodiment, when the internet connection of the IoT device 320 is disconnected, the execution screen 400 may include state information indicating that the IoT device 320 is in an offline state. In an embodiment, the state information (e.g., the state object 410) of the IoT device (e.g., the IoT device 320d) in the offline state may be displayed in black and white. Although not shown, the state object of the controlled device in the online state may be displayed in color. Although not shown, when a user input (e.g., a touch) for the state object 410 is received, the electronic device 201 may display an offline guide pop-up notifying that the corresponding IoT device (e.g., the IoT device 320d) is in an offline state.

In an embodiment, when a user (e.g., a consumer) purchases one or more home appliances having an IoT function and receives them at home, but the internet is not yet activated at the new home (e.g., when the Wi-Fi AP 340 does not exist or is not available), the home appliances may not be onboarded. In an embodiment, since the home appliances in a newly built built-in apartment may not connect to the internet, they may not be onboarded until the user activates the Wi-Fi AP. In an embodiment, an installation engineer may use his/her electronic device (e.g., a smart phone or personal digital assistant (PDA)) as a mobile hotspot to onboard a plurality of home appliances, and then collectively transfer the ownership of the plurality of home appliances to a user account of the consumer. In an embodiment, the electronic device (e.g., the first electronic device) held by the installation engineer may request the server to collectively move the ownership of a plurality of IoT devices (e.g., home appliances) to the user account of the consumer, and cause the electronic device (e.g., the second electronic device) held by the user to transmit new network connection information (e.g., Wi-Fi AP information) to the IoT devices.

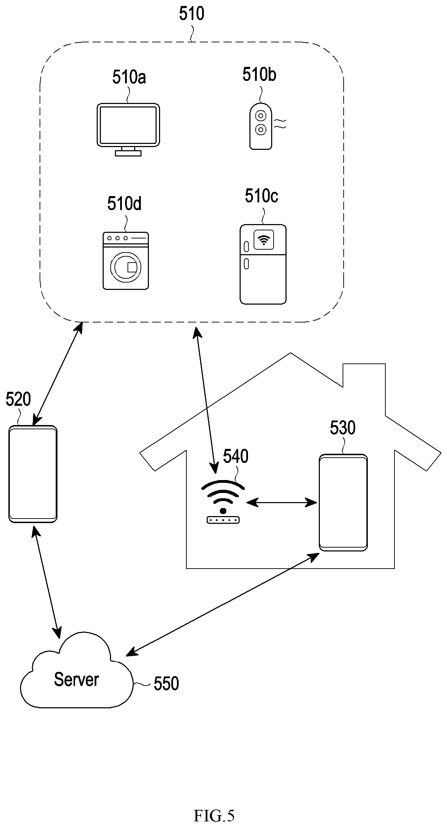

FIG. 5 is a view illustrating ownership transfer of an IoT device according to an embodiment.

Referring to FIG. 5, a second user (e.g., a consumer) may purchase at least one IoT device 510 (e.g., the IoT device 320) (e.g., IoT devices 510a, 510b, 510c, 510d) and request delivery to a first user (e.g., an installation engineer). The first user may perform an operation of registering the IoT devices 510a, 510b, 510c, 510d with a server 550 (e.g., the server 310) (e.g., an onboarding procedure) using the first electronic device 520 (e.g., the electronic device 201) before or after installing the IoT devices 510a, 510b, 510c, 510d at the home of the second user. In an embodiment, the first electronic device 520 may operate as a mobile hotspot to connect with the IoT devices 510a, 510b, 510c, 510d, and cause the IoT devices 510a, 510b, 510c, 510d to connect with the server 550 through the first electronic device 520. Through the onboarding procedure, the server 550 may identify that the ownership of the IoT devices 510a, 510b, 510c, 510d is with the first user holding the first electronic device 520.

In an embodiment, the server 550 may store identification information (e.g., mobile node identifier (mnid)) of the first electronic device 520 and identification information (e.g., serial number (SN)) of the IoT devices 510a, 510b, 510c, 510d together with user information (e.g., a user account, an email address, and/or a phone number). The user information may indicate that the ownership of the IoT devices 510a, 510b, 510c, 510d is with the first user. In an embodiment, one or more IoT devices registered for the first user (e.g., IoT devices 510a, 510b, 510c, 510d) may be related to the same user information.

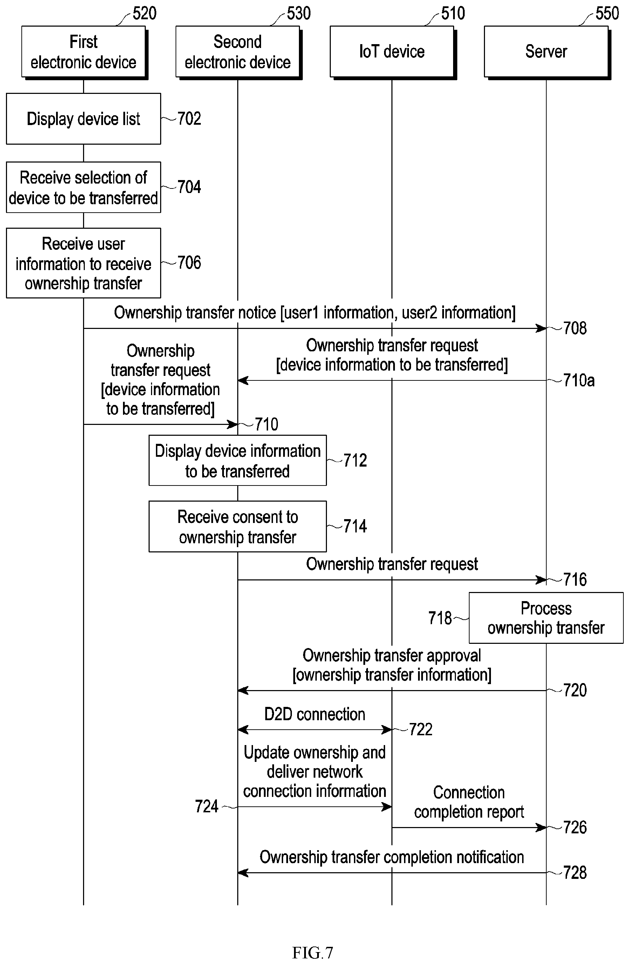

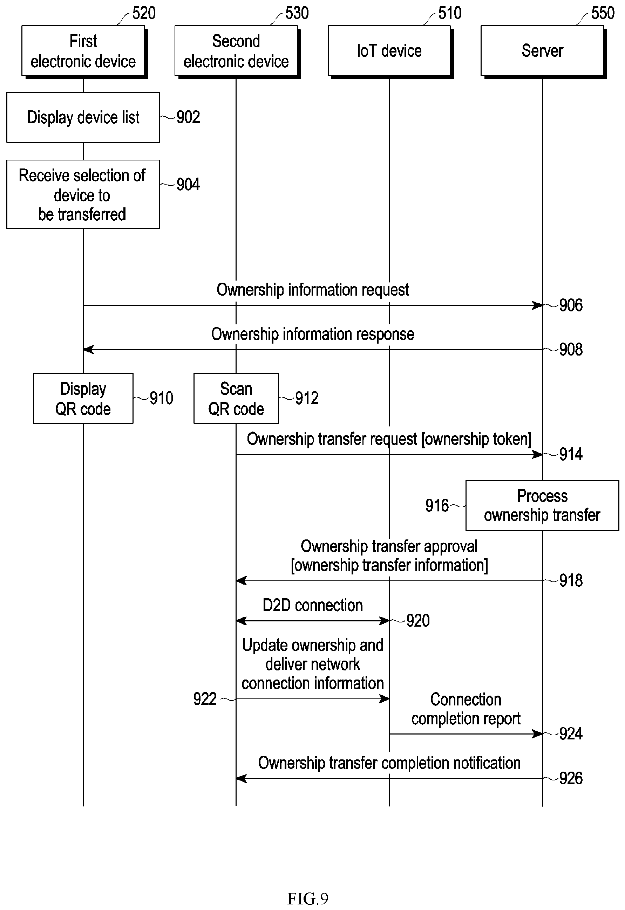

In an embodiment, the first electronic device 520 may receive a user input from the first user requesting to transfer the ownership of the IoT devices 510a, 510b, 510c, 510d to the second user. The first electronic device 520 may request ownership transfer from a second electronic device 530 (e.g., the electronic device 201) held by the second user based on the user input. In an embodiment, the first electronic device 520 may transmit an ownership transfer request message to the second electronic device 530 (e.g., the procedure of FIG. 7) or display a machine-readable code (e.g., a quick response (QR) code) for requesting ownership transfer to cause the second electronic device 530 to scan the code (e.g., the procedure of FIG. 9).

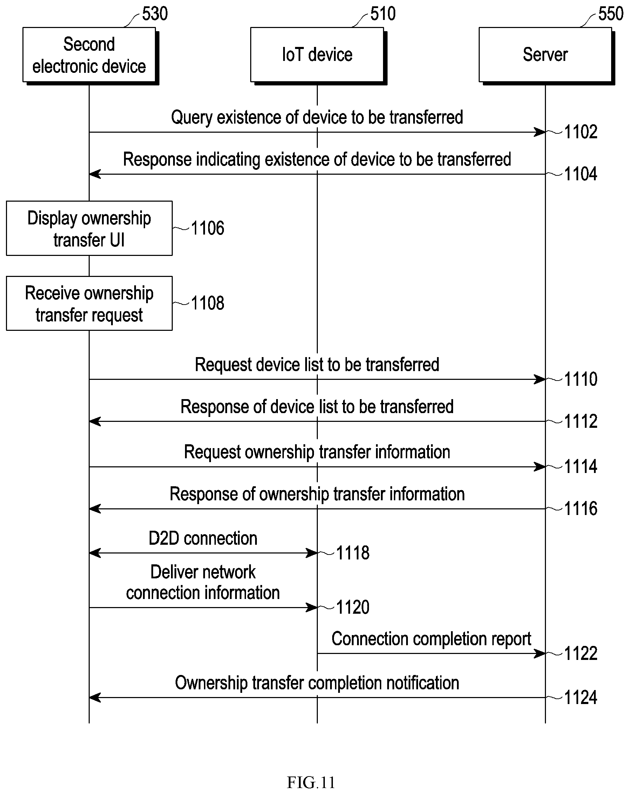

In an embodiment, the first electronic device 520 may transmit an ownership transfer notice indicating that the ownership of the IoT devices 510a, 510b, 510c, 510d is transferred to the second user to the server 550. The second electronic device 530 may inquire the server 550 (e.g., the procedure of FIG. 11) and receive ownership transfer information of the IoT devices 510a, 510b, 510c, 510d from the server 550.

The ownership transfer information may indicate information necessary for registering the IoT devices 510a, 510b, 510c, 510d with the server 550 through the second electronic device 530. In an embodiment, the ownership transfer information may include at least one of identification information (e.g., mnid) of the second electronic device 530, identification information (e.g., a model code and/or serial number) of the IoT devices 510a, 510b, 510c, 510d, a service set identifier (SSID) of the Wi-Fi AP that the IoT devices 510a, 510b, 510c, 510d last connected to, ownership information (e.g., an owner ID) of the IoT devices 510a, 510b, 510c, 510d, or media access control (MAC) address information of the IoT devices 510a, 510b, 510c, 510d.

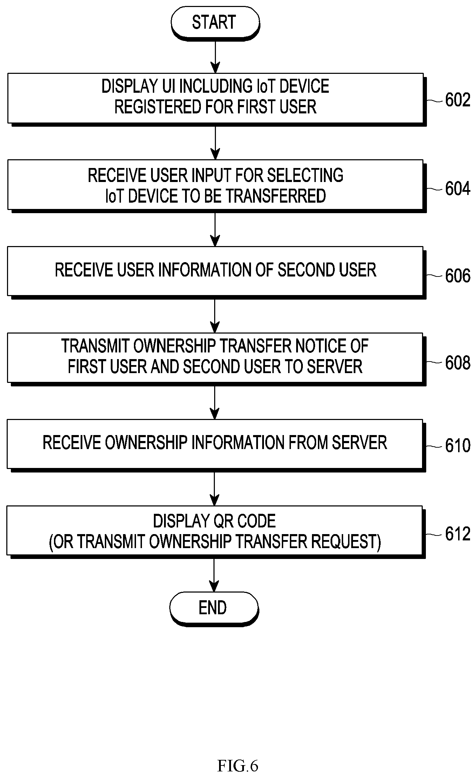

FIG. 6 is a flowchart illustrating a procedure for requesting ownership transfer according to an embodiment of the disclosure. According to embodiments, at least one of the operations described below may be modified, omitted, or executed in a different order. According to embodiments, at least one of the operations described below may be executed by a processor (e.g., the processor 220) of the first electronic device 520.

Referring to FIG. 6, in operation 602, the first electronic device 520 (e.g., the processor 220) may display, through a display module (e.g., the display module 260), a user interface (UI) including a device list of at least one IoT device (e.g., the IoT device 510) registered for the first user. In an embodiment, the device list may include at least one of a device name, an image, a model name, a location, or a connection state of the IoT device 510. In an embodiment, the device list may include at least one of a device name, an image, a model name, a location, or a connection state of one or more IoT devices 510a, 510b, 510c, 510d located at a specified location (e.g., a home, an office, a living room, or a bedroom).

In operation 604, the first electronic device 520 (e.g., the processor 220) may receive, through the UI, a user input requesting to transfer the ownership of the IoT device 510 (in an embodiment, a user input for selecting the IoT device 510). In operation 606, the first electronic device 520 (e.g., the processor 220) may receive user information (e.g., a user account, an email address, and/or a phone number) of the second user who is to receive the ownership of the IoT device 510. In an embodiment, operation 606 may be omitted.

In operation 608, the first electronic device 520 (e.g., the processor 220) may transmit, to the server 550, an ownership transfer notice message indicating that the ownership of the IoT device 510 is transferred from the first user to the second user. In an embodiment, the ownership transfer notice message may include at least one of user1 information indicating the first user, user2 information indicating the second user, or device information indicating the IoT device 510. In an embodiment, the user1 information may include a user account and/or an email address of the first user. In an embodiment, the user2 information may include a user account and/or an email address of the second user. In an embodiment, the device information may include a device identifier (ID) of the IoT device 510.

In an embodiment, the first electronic device 520 (e.g., the processor 220) may transmit the ownership transfer notice to the server 550, thereby causing the server 550 to transmit an ownership transfer request message for requesting to transfer the ownership of the IoT device 510 from the first user to the second user, to the second electronic device 530. In an embodiment, the ownership transfer request message may be transmitted to the second electronic device 530 based on the email address delivered in operation 608. In an embodiment, the ownership transfer request message may be transmitted to the second electronic device 530 through short messaging service (SMS) or an instant messaging service based on the phone number delivered in operation 608. In an embodiment, the ownership transfer request message may be transmitted to the second electronic device 530 through an application push notification based on the user account delivered in operation 608.

In operation 610, the first electronic device 520 (e.g., the processor 220) may receive, from the server 550, ownership information (e.g., an ownership token and/or an owner ID) of the IoT device 510. The ownership information (e.g., the ownership token and/or the owner ID) may indicate a right to receive the ownership from the first user. In an embodiment, operation 610 may be omitted.

In operation 612, the first electronic device 520 (e.g., the processor 220) may display, through the display module 260, a machine-readable code (e.g., a QR code) for requesting to transfer the ownership of the IoT device 510 from the first user to the second user. In an embodiment, the operation of displaying the QR code may correspond to operation 912 of FIG. 9. In an embodiment, the first electronic device 520 (e.g., the processor 220) may generate a QR code including the ownership information (e.g., the owner ID) based on a user input, and display the QR code. The QR code may cause the second electronic device 530 to install a client application for an IoT control service and/or to process the ownership transfer of the IoT device 510 through the client application.

In an embodiment, instead of displaying the QR code, the first electronic device 520 (e.g., the processor 220) may transmit, to the second electronic device 530, an ownership transfer request message for requesting to transfer the ownership of the IoT device 510 from the first user to the second user. In an embodiment, the operation of transmitting the ownership transfer request message may correspond to operation 710 of FIG. 7.

In an embodiment, the ownership transfer request message may be transmitted to the second electronic device 530 based on the email address received in operation 606. In an embodiment, the ownership transfer request message may be transmitted to the second electronic device 530 through SMS or an instant messaging service based on the phone number received in operation 606. In an embodiment, the ownership transfer request message may be transmitted to the second electronic device 530 through an application push notification based on the user account received in operation 606.

FIG. 7 is a sequence diagram illustrating an ownership transfer procedure using an ownership transfer request message according to an embodiment of the disclosure. According to embodiments, at least one of the operations described below may be modified, omitted, or executed in a different order.

Referring to FIG. 7, in operation 702, the first electronic device 520 may display a device list of at least one IoT device (e.g., the IoT device 510) registered for the first user. In an embodiment, the device list may include at least one of a device name, an image, a model name, a location, or a connection state of each IoT device. In operation 704, the first electronic device 520 may receive a user input (e.g., a touch) for selecting at least one IoT device (e.g., the IoT device 510 or a specified device group) to be transferred based on the device list. In operation 706, the first electronic device 520 may receive information (e.g., a user account, an email address, and/or a phone number) of the second user who is to receive the ownership of the IoT device 510.

In operation 708, the first electronic device 520 may transmit, to the server 550, an ownership transfer notice message including user1 information indicating the first user, user2 information indicating the second user, and/or device information indicating the IoT device 510. Although not shown, the first electronic device 520 may, after transmitting the ownership transfer notice message, receive ownership information including an owner ID related to the IoT device 510 from the server 550.

In operation 710, the first electronic device 520 may transmit an ownership transfer request message to the second electronic device 530. In an embodiment, instead of operation 710 being omitted, in operation 710a, the server 550 may transmit the ownership transfer request message to the second electronic device 530 based on the ownership transfer notice message received in operation 708. In an embodiment, the ownership transfer request message may be transmitted based on a phone number, an email address, and/or a user account.

In an embodiment, the ownership transfer request message may include device information to be transferred (e.g., a device list to be transferred) indicating the IoT device 510 and/or ownership information (e.g., an ownership token and/or an owner ID). In an embodiment, the device information to be transferred may include at least one of a device ID, a device name, an image, or a model name. The ownership information may indicate a right to receive the ownership from the first user. In an embodiment, the ownership transfer request message may include information indicating that a device to be transferred to the second electronic device 530 exists, without specific device information. In an embodiment, the second electronic device 530 may, after receiving the ownership transfer request message, obtain the device information to be transferred from the server 550.

In operation 712, the second electronic device 530 may display an ownership transfer guide UI including the device information to be transferred. In an embodiment, the device information to be transferred may include at least one of a device name, an image, or a model name for at least one IoT device (e.g., the IoT device 510). In an embodiment, when the ownership transfer request message does not include specific device information to be transferred, the second electronic device 530 may display information indicating that at least one IoT device to be transferred simply exists. In operation 714, the second electronic device 530 may receive a user input consenting to the ownership transfer. In an embodiment, the second electronic device 530 may receive a user input for selecting at least one IoT device (e.g., the IoT device 510) to be transferred based on the displayed device information to be transferred. In an embodiment, the second electronic device 530 may receive a user input consenting to the ownership transfer of at least one unknown IoT device.

In an embodiment, operations 712 and 714 may be omitted, and the second electronic device 530 may proceed with the ownership transfer processing as a background operation without user intervention.

In operation 716, the second electronic device 530 may transmit an ownership transfer request message to the server 550. In an embodiment, the ownership transfer request message may include device information to be transferred (e.g., a device ID) indicating at least one IoT device (e.g., the IoT device 510) to be transferred and/or ownership information (e.g., an ownership token and/or an owner ID). In an embodiment, the ownership transfer request message may include information requesting ownership transfer of at least one unknown IoT device.

In operation 718, the server 550 may perform ownership transfer processing of the IoT device 510 in response to the ownership transfer request message. In an embodiment, the server 550 may delete previous user information (e.g., information related to the first user and/or the first electronic device 520) of the IoT device 510. In an embodiment, the server 550 may update the user information for the IoT device 510 to the second user. In an embodiment, the server 550 may change the ownership information (e.g., the owner ID) of the IoT device 510. In an embodiment, the server 550 may store the identification information (e.g., mnid) of the second electronic device 530 and the identification information (e.g., serial number) of the IoT device 510 in association with the changed ownership information (e.g., the owner ID). The changed ownership information may indicate that the ownership of the IoT device 510 is with the second user. In an embodiment, the server 550 may register a new location (e.g., a room) for the IoT device 510.

In operation 720, the server 550 may transmit, to the second electronic device 530, an ownership transfer approval message indicating that the ownership of the IoT device 510 has been transferred to the second user. In an embodiment, the ownership transfer approval message may include ownership transfer information indicating information necessary for registering the IoT device 510 with the server 550 through the second electronic device 530. In an embodiment, the ownership transfer information may include at least one of identification information (e.g., mnid) of the second electronic device 530, identification information (e.g., a model code and/or a serial number) of the IoT device 510, an SSID, ownership information (e.g., an owner ID) of the IoT device 510, or at least one MAC address (e.g., a hashed MAC address) of the IoT device 510.

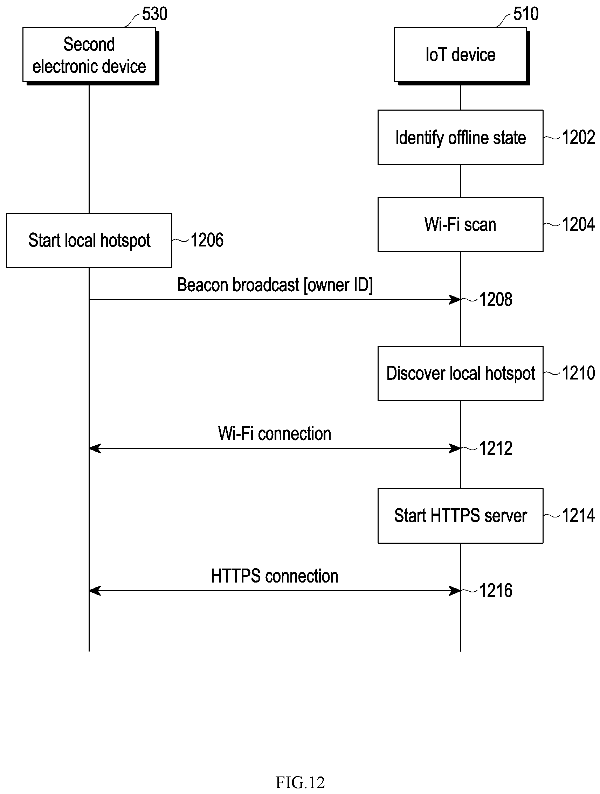

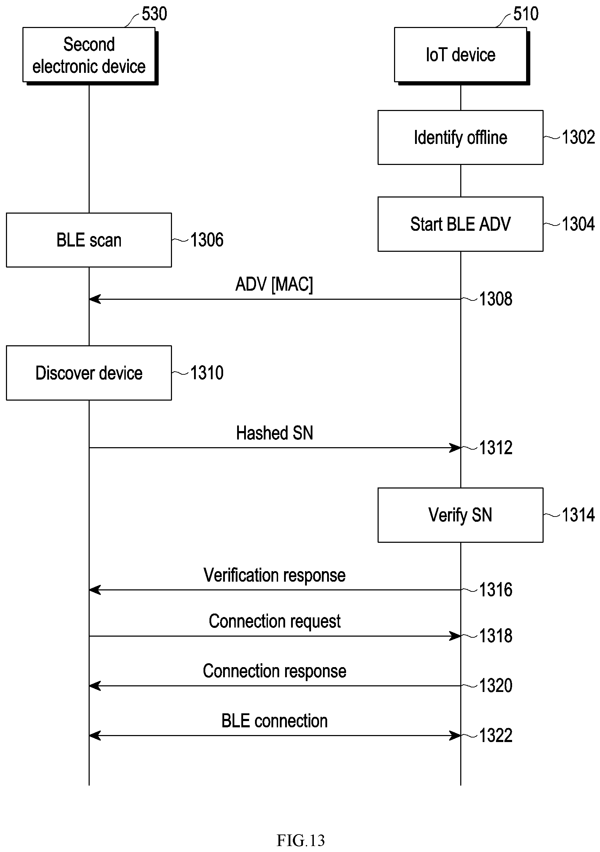

In operation 722, the second electronic device 530 may establish a device-to-device (D2D) connection based on short-range wireless communication with the IoT device 510 based on the ownership transfer information. In an embodiment, the D2D connection may include at least one of a Zigbee connection, a Z-wave connection, a Wi-Fi connection, a Bluetooth legacy connection, and/or a BLE connection. In an embodiment, the ownership transfer information may include a Wi-Fi MAC address of the IoT device 510 and/or a BLE MAC address of the IoT device 510, and the second electronic device 530 may establish a Wi-Fi connection or a BLE connection with the IoT device 510 using the Wi-Fi MAC address or the BLE MAC address. In an embodiment, operation 722 may include the procedure of FIG. 12 or the procedure of FIG. 13.

In operation 724, the second electronic device 530 may deliver, to the IoT device 510 through the D2D connection, network connection information necessary for the IoT device 510 to connect with the server 550. In an embodiment, the network connection information may include a service set ID (SSID), a password, and/or authentication type information of a Wi-Fi AP (e.g., the Wi-Fi AP 540). In an embodiment, the second electronic device 530 may include, in the network connection information, an SSID and a password of a Wi-Fi AP (e.g., the Wi-Fi AP 540) that the second electronic device 530 is currently connected to, or has previously connected to. In an embodiment, the second electronic device 530 may deliver the network connection information to the IoT device 510 through the D2D connection, thereby notifying the IoT device 510 that the ownership of the IoT device 510 has been transferred from the first user to the second user. In an embodiment, the IoT device 510 may store information indicating that the owner of the IoT device 510 has been changed from the first electronic device 520 to the second electronic device 530.

In operation 726, the IoT device 510 may be connected with the server 550 using the network connection information. In an embodiment, the IoT device 510 may connect with the Wi-Fi AP 540 using the SSID and password included in the network connection information, and be connected with the server 550 through the Wi-Fi AP 540. The IoT device 510 may, after being connected with the server 550, transmit a connection completion report to the server 550. The server 550 may update the connection state of the IoT device 510 to an online state based on the connection completion report.

In operation 728, the server 550 may transmit an ownership transfer completion notification message to the second electronic device 530 based on the successful connection of the IoT device 510. The ownership transfer completion notification message may include information indicating that the IoT device 510 is in an online state and that the ownership of the IoT device 510 has been transferred to the second user. In an embodiment, after operation 720 or operation 728, the second electronic device 530 may display a result UI indicating the ownership transfer result (e.g., "The IoT device 510 has been onboarded") of the IoT device 510.

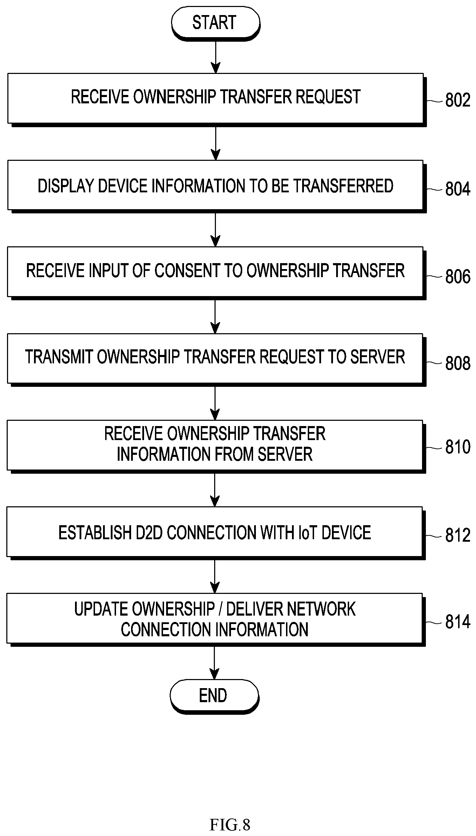

FIG. 8 is a flowchart illustrating a procedure for processing an ownership transfer request message according to an embodiment of the disclosure. According to embodiments, at least one of the operations described below may be modified, omitted, or executed in a different order. According to embodiments, at least one of the operations described below may be executed by a processor (e.g., the processor 220) of the second electronic device 530.

Referring to FIG. 8, in operation 802, the second electronic device 530 (e.g., the processor 220) may receive, from the first electronic device 520 or the server 550, an ownership transfer request message (e.g., the ownership transfer request message of operation 710) related to at least one IoT device to be transferred (e.g., the IoT device 510). In an embodiment, the second electronic device 530 (e.g., the processor 220) may receive the ownership transfer request message through SMS, an instant messaging service, or an email, and execute a client application for an IoT control service based on the reception of the ownership transfer request message. When the client application is not installed, the second electronic device 530 (e.g., the processor 220) may install the client application based on the reception of the ownership transfer request message. In an embodiment, the second electronic device 530 may execute the client application based on the reception of the ownership transfer request message through a push notification of the client application.

In an embodiment, the ownership transfer request message may include device information to be transferred (e.g., a device list to be transferred) related to at least one IoT device to be transferred (e.g., the IoT device 510). In an embodiment, the second electronic device 530 (e.g., the processor 220) may, after receiving the ownership transfer request message, obtain the device information to be transferred from the server 550. In an embodiment, the ownership transfer request message may include device information to be transferred (e.g., a device list to be transferred) indicating the IoT device 510 and/or ownership information (e.g., an ownership token and/or an owner ID).

In operation 804, the second electronic device 530 (e.g., the processor 220) may display the device information to be transferred (e.g., the device information to be transferred of operation 712) based on the ownership transfer request message. In an embodiment, the device information to be transferred may include at least one of a device name, an image, or a model name for at least one IoT device (e.g., the IoT device 510). In an embodiment, the device information to be transferred may include information indicating that at least one IoT device to be received by the second user simply exists.

In operation 806, the second electronic device 530 (e.g., the processor 220) may receive a user input consenting to the ownership transfer (e.g., the user input of operation 714). The user input may include a user input for selecting at least one IoT device to receive the ownership, or a user input consenting to the ownership transfer of an arbitrary IoT device.

In operation 808, the second electronic device 530 (e.g., the processor 220) may transmit an ownership transfer request message (e.g., the ownership transfer request message of operation 716) to the server 550. In an embodiment, the ownership transfer request message may include information (e.g., a device ID) indicating at least one IoT device (e.g., the IoT device 510) to receive the ownership transfer and/or ownership information (e.g., an ownership token and/or an owner ID). In an embodiment, the ownership transfer request message may include information requesting ownership transfer of at least one unknown IoT device.

In operation 810, the second electronic device 530 (e.g., the processor 220) may receive ownership transfer information (e.g., the ownership transfer information of operation 720) from the server 550. In an embodiment, the ownership transfer information may include at least one of identification information (e.g., mnid) of the second electronic device 530, identification information (e.g., a model code and/or a serial number) of at least one IoT device to be transferred (e.g., the IoT device 510), an SSID, ownership information (e.g., an owner ID) of the IoT device 510, or at least one MAC address of the IoT device 510.

In operation 812, the second electronic device 530 (e.g., the processor 220) may establish a D2D connection (e.g., the D2D connection of operation 722) with the IoT device 510 based on the ownership transfer information. In operation 814, the second electronic device 530 (e.g., the processor 220) may deliver, to the IoT device 510 through the D2D connection, network connection information (e.g., the network connection information of operation 724), thereby causing the IoT device 510 to connect to the server 550 through the network connection information. The network connection information may include an SSID and a password of a Wi-Fi AP (e.g., the Wi-Fi AP 540) that the second electronic device 530 is connected to, or has previously connected to. In an embodiment, the second electronic device 530 may deliver the network connection information to the IoT device 510, thereby notifying the IoT device 510 that the ownership of the IoT device 510 has been transferred from the first user to the second user.

FIG. 9 is a sequence diagram illustrating an ownership transfer procedure using a QR code according to an embodiment of the disclosure. According to embodiments, at least one of the operations described below may be modified, omitted, or executed in a different order.

Referring to FIG. 9, in operation 902, the first electronic device 520 may display a device list of at least one IoT device (e.g., the IoT device 510) registered for the first user. In an embodiment, the device list may include at least one of a device name, an image, a model name, a location, or a connection state of each IoT device. In operation 904, the first electronic device 520 may receive a user input (e.g., a touch) for selecting at least one IoT device to be transferred (e.g., the IoT device 510 or a specified device group) based on the device list.

In operation 906, the first electronic device 520 may transmit, to the server 550, an ownership information request message for requesting ownership information (e.g., an ownership token and/or an owner ID) related to the first user. In an embodiment, the ownership information request message may include device information indicating the at least one IoT device selected in operation 904. In operation 908, the first electronic device 520 may transmit, to the second electronic device 530, an ownership information response message including the ownership information (e.g., the ownership token and/or the owner ID) related to the first user. The ownership information (e.g., the ownership token and/or the owner ID) may indicate a right to receive the ownership from the first user.

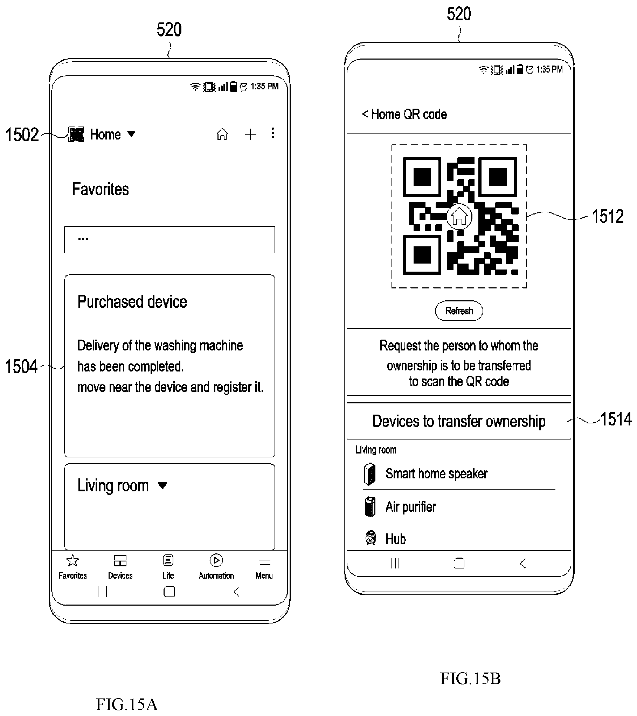

In operation 910, the second electronic device 530 may display a QR code for requesting ownership transfer (e.g., the QR code 1512 of FIG. 15B). In an embodiment, the QR code may include the ownership information. The QR code may include information for causing the second electronic device 530 to install a client application for an IoT control service and/or to perform an operation for ownership transfer of the IoT device 510 (e.g., operation 914) through the client application. In operation 912, the second electronic device 530 may scan the QR code to obtain the ownership information. Although not shown, in an embodiment, the second electronic device 530 may receive a user input consenting to the ownership transfer based on scanning the QR code. In an embodiment, the second electronic device 530 may display an ownership transfer guide UI (e.g., the ownership transfer guide UI 1702) based on scanning the QR code, and receive a user input consenting to the ownership transfer through the ownership transfer guide UI.

In operation 914, the second electronic device 530 may transmit an ownership transfer request message to the server 550 based on scanning the QR code. In an embodiment, the ownership transfer request message may include information indicating at least one IoT device to be transferred, information indicating a group (e.g., a location or space) of at least one IoT device to be transferred, and/or ownership information (e.g., an ownership token and/or an owner ID) obtained from the QR code. In an embodiment, the ownership transfer request message may include information for requesting ownership transfer of at least one IoT device registered for the ownership information.

In operation 916, the server 550 may perform ownership transfer processing of at least one registered IoT device (e.g., the IoT device 510) corresponding to the ownership information in response to the ownership transfer request message. In an embodiment, the server 550 may perform ownership transfer processing of at least one IoT device (e.g., the IoT device 510) identified by the ownership information request message of operation 906 among one or more IoT devices registered for the owner ID.

In an embodiment, the server 550 may delete previous user information (e.g., information related to the first user and/or the first electronic device 520) of the IoT device 510. In an embodiment, the server 550 may update the user information for the IoT device 510 to the second user. In an embodiment, the server 550 may change the ownership information (e.g., the owner ID) of the IoT device 510. In an embodiment, the server 550 may store the identification information (e.g., mnid) of the second electronic device 530 and the identification information (e.g., a model code and/or a serial number) of the IoT device 510 in association with the changed ownership information (e.g., the owner ID). The changed ownership information may indicate that the ownership of the IoT device 510 is with the second user. In an embodiment, the server 550 may register a new location (e.g., a room) for the IoT device 510.

In operation 918, the server 550 may transmit, to the second electronic device 530, an ownership transfer approval message indicating that the ownership of the IoT device 510 has been transferred to the second user. In an embodiment, the ownership transfer approval message may include ownership transfer information indicating information necessary for registering the IoT device 510 with the server 550 through the second electronic device 530. In an embodiment, the ownership transfer information may include at least one of identification information (e.g., mnid) of the second electronic device 530, identification information (e.g., a model code and/or a serial number) of at least one IoT device to be transferred (e.g., the IoT device 510), an SSID, ownership information (e.g., an owner ID) of the IoT device 510, or at least one MAC address of the IoT device 510. In an embodiment, the ownership transfer information may include at least one hashed MAC address.

In operation 920, the second electronic device 530 may establish a D2D connection based on short-range wireless communication with the IoT device 510 based on the ownership transfer information. In an embodiment, the D2D connection may include at least one of a Zigbee connection, a Z-wave connection, a Wi-Fi connection, a Bluetooth legacy connection, and/or a BLE connection. In an embodiment, the ownership transfer information may include a Wi-Fi MAC address of the IoT device 510 and/or a BLE MAC address of the IoT device 510, and the second electronic device 530 may establish a Wi-Fi connection or a BLE connection with the IoT device 510 using the Wi-Fi MAC address or the BLE MAC address. In an embodiment, operation 920 may include the procedure of FIG. 12 or the procedure of FIG. 13.

In operation 922, the second electronic device 530 may deliver, to the IoT device 510 through the D2D connection, network connection information necessary for the IoT device 510 to connect with the server 550. In an embodiment, the network connection information may include an SSID, a password, and/or authentication type information of a Wi-Fi AP (e.g., the Wi-Fi AP 540). In an embodiment, the second electronic device 530 may include, in the network connection information, an SSID and a password of a Wi-Fi AP (e.g., the Wi-Fi AP 540) that the second electronic device 530 is currently connected to, or has previously connected to. In an embodiment, the second electronic device 530 may deliver the network connection information to the IoT device 510 through the D2D connection, thereby notifying the IoT device 510 that the ownership of the IoT device 510 has been transferred from the first user to the second user. In an embodiment, the IoT device 510 may store information indicating that the owner of the IoT device 510 has been changed from the first electronic device 520 to the second electronic device 530.

In operation 924, the IoT device 510 may be connected with the server 550 using the network connection information. In an embodiment, the IoT device 510 may connect with the Wi-Fi AP 540 using the SSID and password included in the network connection information, and be connected with the server 550 through the Wi-Fi AP 540. The IoT device 510 may, after being connected with the server 550, transmit a connection completion report to the server 550. The server 550 may update the connection state of the IoT device 510 to an online state based on the connection completion report.

In operation 926, the server 550 may transmit an ownership transfer completion notification message to the second electronic device 530 based on the successful connection of the IoT device 510. The ownership transfer completion notification message may include information indicating that the IoT device 510 is in an online state and that the ownership of the IoT device 510 has been transferred to the second user. In an embodiment, after operation 918 or operation 926, the second electronic device 530 may display a result UI indicating the ownership transfer result (e.g., "The IoT device 510 has been onboarded") of the IoT device 510.

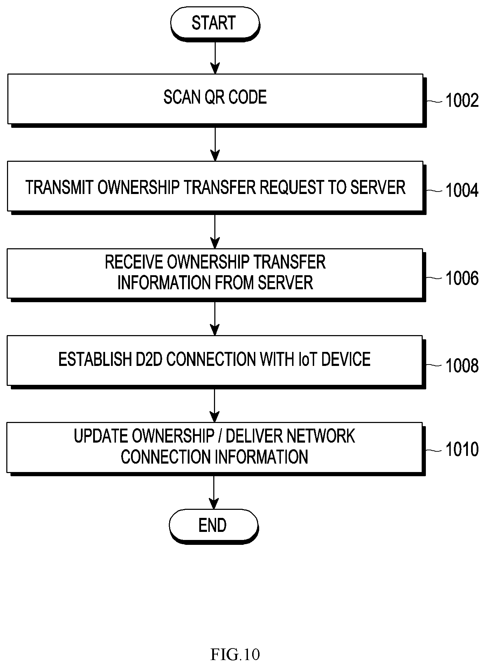

FIG. 10 is a flowchart illustrating a procedure for processing ownership transfer based on a QR code according to an embodiment of the disclosure. According to embodiments, at least one of the operations described below may be modified, omitted, or executed in a different order. According to embodiments, at least one of the operations described below may be executed by a processor (e.g., the processor 220) of the second electronic device 530.

Referring to FIG. 10, in operation 1002, the second electronic device 530 (e.g., the processor 220) may scan a QR code (e.g., the QR code 1512 of FIG. 15B) to obtain ownership information (e.g., an ownership token and/or an owner ID) included in the QR code. In an embodiment, the second electronic device 530 (e.g., the processor 220) may execute a client application for an IoT control service based on scanning the QR code. When the client application is not installed, the second electronic device 530 (e.g., the processor 220) may install the client application based on scanning the QR code. In an embodiment, the second electronic device 530 (e.g., the processor 220) may proceed to operation 1004 to process the ownership transfer of the IoT device 510 through the client application based on scanning the QR code. Although not shown, in an embodiment, the second electronic device 530 may receive a user input consenting to the ownership transfer based on scanning the QR code.

In operation 1004, the second electronic device 530 (e.g., the processor 220) may transmit, to the server 550, an ownership transfer request message including the ownership information (e.g., the ownership transfer request message of operation 914). In an embodiment, the ownership transfer request message may include information for requesting ownership transfer of at least one IoT device registered for the ownership information.

In operation 1006, the second electronic device 530 (e.g., the processor 220) may receive ownership transfer information (e.g., the ownership transfer information of operation 918) from the server 550. In an embodiment, the ownership transfer information may include at least one of identification information (e.g., mnid) of the second electronic device 530, identification information (e.g., a model code and/or a serial number) of at least one IoT device to be transferred (e.g., the IoT device 510), an SSID, ownership information (e.g., an owner ID) of the IoT device 510, or at least one MAC address of the IoT device 510.

In operation 1008, the second electronic device 530 (e.g., the processor 220) may establish a D2D connection (e.g., the D2D connection of operation 920) with the IoT device 510 based on the ownership transfer information. In operation 1010, the second electronic device 530 (e.g., the processor 220) may deliver, to the IoT device 510 through the D2D connection, network connection information (e.g., the network connection information of operation 922) necessary for the IoT device 510 to connect with the server 550, thereby causing the IoT device 510 to connect to the server 550 through the network connection information. In an embodiment, the second electronic device 530 may deliver the network connection information to the IoT device 510, thereby notifying the IoT device 510 that the ownership of the IoT device 510 has been transferred from the first user to the second user.

FIG. 11 is a sequence diagram illustrating a procedure for processing ownership transfer according to an embodiment of the disclosure. According to embodiments, at least one of the operations described below may be modified, omitted, or executed in a different order.

Referring to FIG. 11, in operation 1102, the second electronic device 530 may transmit, to the server 550, a query message for querying the existence of an IoT device to be transferred. In an embodiment, the second electronic device 530 may execute a client application for an IoT control service, and transmit the query message based on receiving a user input requesting ownership transfer through the client application. In an embodiment, the query message may include user information (e.g., a user account, an email address, and/or a phone number) of the second user.

Although not shown, in an embodiment, the server 550 may receive, from the first electronic device 520, an ownership transfer notice indicating that the ownership of at least one IoT device (e.g., the IoT device 510) is transferred from the first user to the second user, and store the information of the ownership transfer notice. In an embodiment, the server 550 may search the information of the ownership transfer notice based on receiving the query message, and determine the ownership transfer processing of the IoT device 510 related to the second user.

In operation 1104, the server 550 may transmit, to the second electronic device 530, a response message indicating that at least one IoT device whose ownership is to be transferred exists.

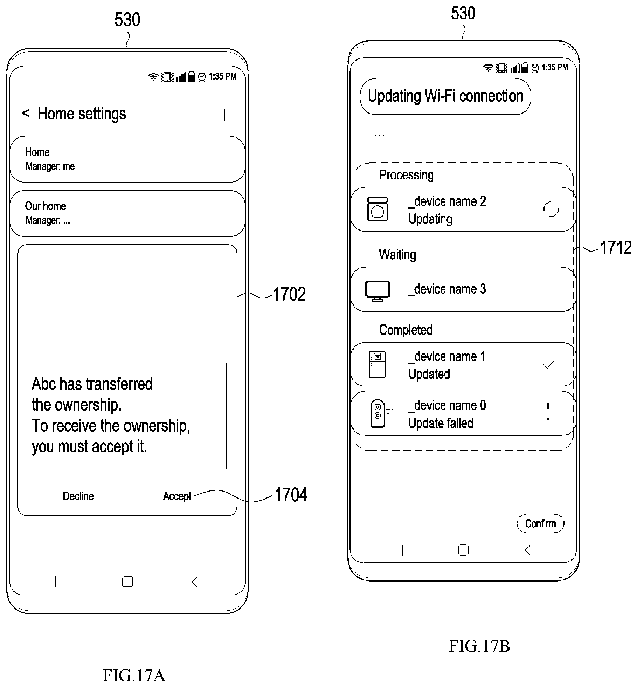

In operation 1106, the second electronic device 530 may display, through a display module (e.g., the display module 260), an ownership transfer guide UI (e.g., the ownership transfer guide UI 1702 of FIG. 17A) indicating that at least one IoT device to receive the ownership transfer exists. In operation 1108, the second electronic device 530 may receive a user input (e.g., the user input 1704) requesting to process the ownership transfer through the ownership transfer guide UI.

In operation 1110, the second electronic device 530 may transmit, to the server 550, a request message for requesting a device list to be transferred. In operation 1112, the server 550 may transmit, to the second electronic device 530, a response message including a device list including at least one IoT device (e.g., the IoT device 510) for which the ownership transfer was requested, e.g., related to the ownership transfer notice.

In operation 1114, the second electronic device 530 may transmit, to the server 550, a request message for requesting ownership transfer information necessary for processing the ownership transfer of the IoT device 510. In operation 1116, the server 550 may transmit, to the second electronic device 530, a response message including the ownership transfer information. In an embodiment, the ownership transfer information may include at least one of identification information (e.g., mnid) of the second electronic device 530, identification information (e.g., a model code and/or a serial number) of at least one IoT device to be transferred (e.g., the IoT device 510), an SSID, ownership information (e.g., an owner ID) of the IoT device 510, or at least one MAC address of the IoT device 510. In an embodiment, the ownership transfer information may include at least one hashed MAC address.

In operation 1118, the second electronic device 530 may establish a D2D connection based on short-range wireless communication with the IoT device 510 based on the ownership transfer information. In an embodiment, the D2D connection may include at least one of a Zigbee connection, a Z-wave connection, a Wi-Fi connection, a Bluetooth legacy connection, and/or a BLE connection. In an embodiment, the ownership transfer information may include a Wi-Fi MAC address of the IoT device 510 and/or a BLE MAC address of the IoT device 510, and the second electronic device 530 may establish a Wi-Fi connection or a BLE connection with the IoT device 510 using the Wi-Fi MAC address or the BLE MAC address. In an embodiment, operation 1118 may include the procedure of FIG. 12 or the procedure of FIG. 13.

In operation 1120, the second electronic device 530 may deliver, to the IoT device 510 through the D2D connection, network connection information necessary for the IoT device 510 to connect with the server 550. In an embodiment, the network connection information may include an SSID, a password, and/or authentication type information of a Wi-Fi AP (e.g., the Wi-Fi AP 540). In an embodiment, the second electronic device 530 may include, in the network connection information, an SSID and a password of a Wi-Fi AP (e.g., the Wi-Fi AP 540) that the second electronic device 530 is currently connected to, or has previously connected to. In an embodiment, the second electronic device 530 may deliver the network connection information to the IoT device 510 through the D2D connection, thereby notifying the IoT device 510 that the ownership of the IoT device 510 has been transferred from the first user to the second user. In an embodiment, the IoT device 510 may store information indicating that the owner of the IoT device 510 has been changed from the first electronic device 520 to the second electronic device 530.

In operation 1122, the IoT device 510 may be connected with the server 550 using the network connection information. In an embodiment, the IoT device 510 may connect with the Wi-Fi AP 540 using the SSID and password included in the network connection information, and be connected with the server 550 through the Wi-Fi AP 540. The IoT device 510 may, after being connected with the server 550, transmit a connection completion report to the server 550. The server 550 may update the connection state of the IoT device 510 to an online state based on the connection completion report. The server 550 may update the user information of the IoT device 510 to the second user based on the connection completion report.

In operation 1124, the server 550 may transmit an ownership transfer completion notification message to the second electronic device 530 based on the successful connection of the IoT device 510. The ownership transfer completion notification message may include information indicating that the IoT device 510 is in an online state and that the ownership of the IoT device 510 has been transferred to the second user. In an embodiment, after operation 1116 or operation 1124, the second electronic device 530 may display a result UI indicating the ownership transfer result (e.g., "The IoT device 510 has been onboarded") of the IoT device 510.

FIG. 12 is a sequence diagram illustrating a procedure for establishing a Wi-Fi connection according to an embodiment of the disclosure. According to embodiments, at least one of the operations described below may be modified, omitted, or executed in a different order.

Referring to FIG. 12, in operation 1202, the IoT device 510 may identify that it is in a state of being disconnected from the server 550 (e.g., an offline state). In an embodiment, after the IoT device 510 is registered with the server 550 through the first electronic device 520 using the first electronic device 520 as a mobile hotspot, the IoT device 510 may become in an offline state based on the disconnection of the connection with the mobile hotspot (i.e., the first electronic device 520).

In operation 1204, the IoT device 510 may perform a specified operation (e.g., a Wi-Fi scan) based on identifying the offline state. In an embodiment, the IoT device 510 may perform a Wi-Fi scan for searching for a previously connected Wi-Fi AP (e.g., the first electronic device 520) and a specified AP (e.g., a local hotspot AP). In an embodiment, the local hotspot AP may refer to an AP having a specified SSID (e.g., an SSID including an owner ID).

In operation 1206, the second electronic device 530 may start operating in a local hotspot mode to process ownership transfer. In an embodiment, the second electronic device 530 may start the local hotspot mode based on receiving an ownership transfer request message from the first electronic device 520 (e.g., the ownership transfer request message of operation 710), scanning a QR code including an owner ID (e.g., the QR code of operation 910), or receiving ownership transfer information including an owner ID from the server 550 (e.g., the ownership transfer information of operation 1116). In an embodiment, the second electronic device 530 may start the local hotspot mode based on identifying that the IoT device 510 supports a soft AP mode. In an embodiment, the second electronic device 530 may start the local hotspot mode based on identifying that a Wi-Fi MAC address (e.g., a hashed Wi-Fi MAC address) is included in the ownership transfer information of the IoT device 510.

In operation 1208, the second electronic device 530 may broadcast a beacon message including a specified SSID according to the local hotspot mode. In an embodiment, at least some bits of the specified SSID may be set to the owner ID. In an embodiment, at least some bits of the specified SSID may be set to a hashed value of the owner ID.

In operation 1210, the IoT device 510 may discover the second electronic device 530 operating in the local hotspot mode by receiving the beacon message through the Wi-Fi scan. The IoT device 510 may obtain the owner ID from the SSID included in the beacon message using a specified hash function.

In operation 1212, the second electronic device 530 may establish a Wi-Fi connection with the IoT device 510. In an embodiment, the second electronic device 530 may establish the Wi-Fi connection based on the Wi-Fi MAC address (e.g., the hashed Wi-Fi MAC address) of the IoT device 510 included in the ownership transfer information.

In operation 1214, the IoT device 510 may start operating in a hypertext transfer protocol secure (HTTPS) server mode after the Wi-Fi connection is established. In an embodiment, the IoT device 510 may start the HTTPS server mode based on establishing a Wi-Fi connection with a new AP (e.g., the second electronic device 530) or a specified local hotspot (e.g., the second electronic device 530) in an offline state. In operation 1216, the second electronic device 530 may establish an HTTPS connection with the IoT device 510 through the Wi-Fi connection. In an embodiment, the second electronic device 530 may establish the HTTPS connection based on discovering an internet protocol (IP) address of the IoT device 510 from a specified address resolution protocol (ARP) table. The HTTPS connection may be used to carry the network connection information from the second electronic device 530 to the IoT device 510.

FIG. 13 is a sequence diagram illustrating a procedure for establishing a BLE connection according to an embodiment of the disclosure. According to embodiments, at least one of the operations described below may be modified, omitted, or executed in a different order.

Referring to FIG. 13, in operation 1302, the IoT device 510 may identify that it is in a state of being disconnected from the server 550 (e.g., an offline state). In an embodiment, after the IoT device 510 is registered with the server 550 through the first electronic device 520 using the first electronic device 520 as a mobile hotspot, the IoT device 510 may become in an offline state based on the disconnection of the connection with the mobile hotspot (i.e., the first electronic device 520).

In operation 1304, the IoT device 510 may perform a specified operation (e.g., BLE advertising) based on identifying the offline state. In an embodiment, the IoT device 510 may broadcast a BLE advertising message including a BLE MAC address of the IoT device 510.

In operation 1306, the second electronic device 530 may perform a BLE scan for processing ownership transfer. In an embodiment, the second electronic device 530 may start the BLE scan based on receiving an ownership transfer request message from the first electronic device 520 (e.g., the ownership transfer request message of operation 710), scanning a QR code including an owner ID (e.g., the QR code of operation 910), or receiving ownership transfer information including an owner ID from the server 550 (e.g., the ownership transfer information of operation 1116). In an embodiment, the second electronic device 530 may start the BLE scan based on identifying that the IoT device 510 supports BLE. In an embodiment, the second electronic device 530 may start the BLE scan based on identifying that a BLE MAC address (e.g., a hashed BLE MAC address) is included in the ownership transfer information of the IoT device 510.

In operation 1308, the second electronic device 530 may receive the BLE advertising message broadcast from the IoT device 510 through the BLE scan. In operation 1310, the second electronic device 530 may discover the IoT device 510 to receive the ownership based on the BLE MAC address included in the BLE advertising message matching the BLE MAC address included in the ownership transfer information.

In operation 1312, the second electronic device 530 may transmit, to the IoT device 510, a hashed value (e.g., a hashed SN) of the SN included in the ownership transfer information. In operation 1314, the IoT device 510 may verify the hashed SN. In an embodiment, the IoT device 510 may decrypt the hashed SN using a specified hash function to obtain the SN, and determine whether the obtained SN matches the SN of the IoT device 510. When the obtained SN matches the SN of the IoT device 510, the IoT device 510 may determine that the verification of the hashed SN was successful.

In operation 1316, the IoT device 510 may transmit, to the second electronic device 530, a verification response message indicating that the verification of the hashed SN was successful. In operation 1318, the second electronic device 530 may transmit a connection request message for a BLE connection to the IoT device 510. In operation 1320, the IoT device 510 may transmit, to the second electronic device 530, a connection response message corresponding to the connection request message. In operation 1322, the second electronic device 530 may establish a BLE connection with the IoT device 510. The BLE connection may be used to carry the network connection information from the second electronic device 530 to the IoT device 510.

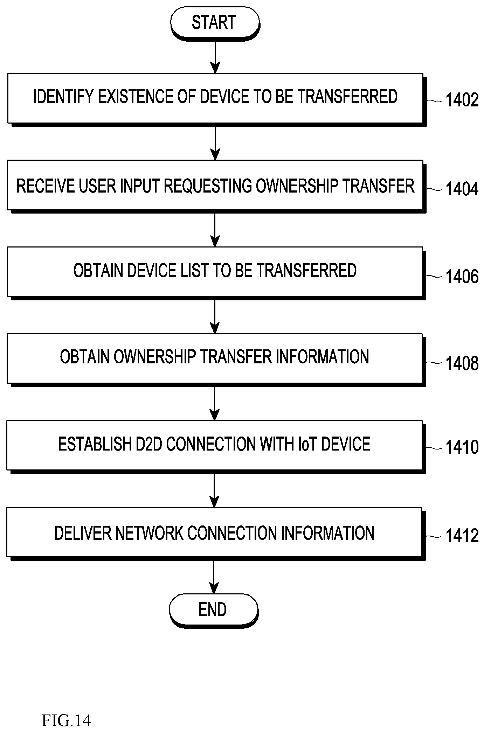

FIG. 14 is a flowchart illustrating a procedure for processing ownership transfer according to an embodiment of the disclosure. According to embodiments, at least one of the operations described below may be modified, omitted, or executed in a different order. According to embodiments, at least one of the operations described below may be executed by a processor (e.g., the processor 220) of the second electronic device 530.

Referring to FIG. 14, in operation 1402, the second electronic device 530 (e.g., the processor 220) may identify that at least one IoT device to receive the ownership transfer exists. In an embodiment, the second electronic device 530 (e.g., the processor 220) may transmit, to the server 550, a query message for querying the existence of an IoT device to be transferred (e.g., the query message of operation 1102), and receive, from the server 550, a response message indicating that at least one IoT device whose ownership is to be transferred exists (e.g., operation 1104).

In operation 1404, the second electronic device 530 (e.g., the processor 220) may receive a user input requesting ownership transfer. In an embodiment, the second electronic device 530 (e.g., the processor 220) may display an ownership transfer guide UI (e.g., the ownership transfer guide UI of operation 1106) for receiving an input as to whether to execute ownership transfer, and receive the user input through the ownership transfer guide UI.

In operation 1406, the second electronic device 530 (e.g., the processor 220) may obtain a device list to be transferred including at least one IoT device (e.g., the IoT device 510) to receive the ownership transfer. In an embodiment, the second electronic device 530 (e.g., the processor 220) may transmit, to the server 550, a request message for requesting a device list to be transferred (e.g., the request message of operation 1110), and receive, from the server 550, a response message including the device list to be transferred (e.g., the response message of operation 1112).

In operation 1408, the second electronic device 530 (e.g., the processor 220) may obtain ownership transfer information related to at least one IoT device (e.g., the IoT device 510) to receive the ownership transfer. In an embodiment, the second electronic device 530 (e.g., the processor 220) may transmit, to the server 550, a request message for requesting ownership transfer information necessary for processing the ownership transfer of the IoT device 510 (e.g., the request message of operation 1114), and receive, from the server 550, a response message including the ownership transfer information (e.g., the response message of operation 1116).

In operation 1410, the second electronic device 530 (e.g., the processor 220) may establish a D2D connection based on short-range wireless communication with the IoT device 510 based on the ownership transfer information (e.g., the D2D connection of operation 1118). In operation 1412, the second electronic device 530 (e.g., the processor 220) may deliver, to the IoT device 510 through the D2D connection, network connection information necessary for the IoT device 510 to connect with the server 550 (e.g., the network connection information of operation 1120), thereby causing the IoT device 510 to connect to the server 550 through the network connection information. In an embodiment, the second electronic device 530 may deliver the network connection information to the IoT device 510, thereby notifying the IoT device 510 that the ownership of the IoT device 510 has been transferred from the first user to the second user.

FIGS. 15A and 15B illustrate a UI including a QR code for requesting ownership transfer according to an embodiment of the disclosure.

Referring to FIG. 15A, the first electronic device 520 may display an execution screen 1502 of a client application for IoT setting (e.g., an application for installation engineers). The execution screen 1502 may include a device information object 1504 of at least one IoT device (e.g., the IoT device 510). In an embodiment, the device information object 1504 may include a guide phrase for registering the IoT device 510 (e.g., "The delivery of the washing machine has been completed. Please move near the device and register it"). The first electronic device 520 may perform an onboarding procedure for registering the IoT device 510 with the server based on a user input through the device information object 1504.

Referring to FIG. 15B, the first electronic device 520 may display a QR code 1512 for ownership transfer of the IoT device 510 and a device list 1514 where the ownership is to be transferred. In an embodiment, the first electronic device 520 may display the QR code 1512 based on a user input requesting ownership transfer. The QR code 1512 may include the ownership information (e.g., an ownership token and/or an owner ID) of the IoT device 510 that the second electronic device 530 received from the server 550. The QR code may include information for causing an external electronic device (e.g., the second electronic device 530) that scanned the QR code to install a client application for an IoT control service and/or to perform an operation for ownership transfer of the IoT device 510 (e.g., operation 914) through the client application.

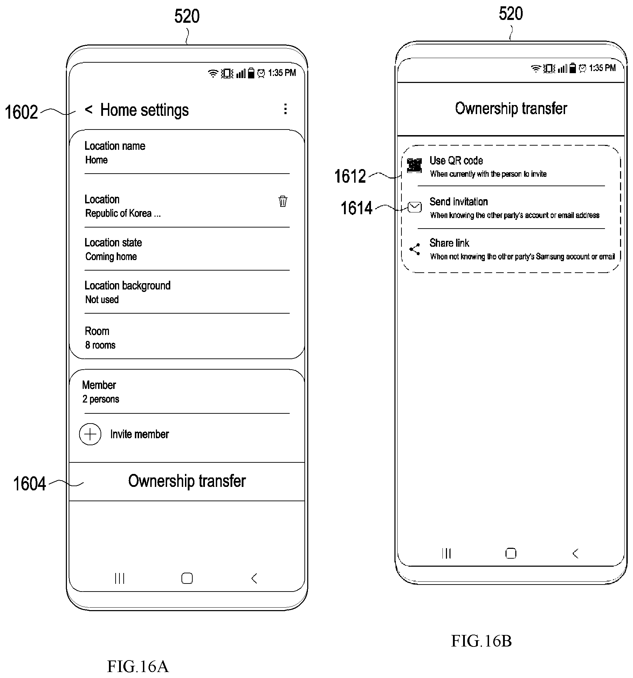

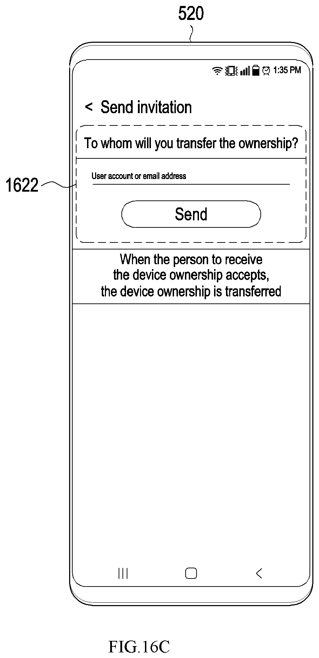

FIGS. 16A, 16B, and 16C illustrate a UI for transmitting an ownership transfer request according to an embodiment of the disclosure.

Referring to FIG. 16A, the first electronic device 520 may display an execution screen 1602 of a client application for IoT setting (e.g., an application for installation engineers). The execution screen 1602 may include an input object 1604 for requesting to execute ownership transfer of at least one IoT device (e.g., the IoT device 510). Based on a user input (e.g., a touch) for the input object 1604, the first electronic device 520 may display the ownership transfer screen 1612 of FIG. 16B.

Referring to FIG. 16B, the ownership transfer screen 1612 displayed by the first electronic device 520 may include a first input object 1614 for selecting the display of a QR code, a second input object 1616 for selecting the transmission of an ownership transfer request to an external electronic device (e.g., the second electronic device 530), and/or a third input object 1618 for selecting link sharing for causing an external electronic device (e.g., the second electronic device 530) to perform ownership transfer.

In an embodiment, the first electronic device 520 may display the QR code 1512 of FIG. 15B based on a user input (e.g., a touch) for the first input object 1614. In an embodiment, the first electronic device 520 may directly transmit an ownership transfer request message to an external electronic device (e.g., the second electronic device 530) related to the user (e.g., the second user) to receive the ownership, or transmit it through the server 550, based on a user input (e.g., a touch) for the second input object 1616. In an embodiment, the ownership transfer request message may be transmitted to the second electronic device 530 through an application push notification based on the user account of the second user. In an embodiment, the ownership transfer request message may be transmitted to the second electronic device 530 through an email based on the email address of the second user.

In an embodiment, the first electronic device 520 may generate a link for causing an external electronic device (e.g., the second electronic device 530) to perform ownership transfer based on a user input (e.g., a touch) for the third input object 1616.

Referring to FIG. 16C, the first electronic device 520 may display an input object 1622 for requesting ownership transfer based on a user input (e.g., a touch) for the second input object 1616. The input object 1622 may receive a user account or an email address of the second user to receive the ownership. In an embodiment, the first electronic device 520 may directly transmit an ownership transfer request message to the second electronic device 530 using the user account or email address received through the input object 1622. In an embodiment, the first electronic device 520 may deliver the user account or email address received through the input object 1622 to the server 550, thereby causing the server 550 to transmit an ownership transfer request message to the second electronic device 530.

FIGS. 17A and 17B illustrate a UI including a processing procedure of ownership transfer according to an embodiment of the disclosure.

Referring to FIG. 17A, the second electronic device 530 may display an ownership transfer guide UI 1702 notifying that ownership transfer has been requested through a client application for an IoT control service. In an embodiment, the ownership transfer guide UI 1702 may include a phrase guiding ownership transfer, e.g., "Abc has transferred the ownership. To receive the ownership, you must accept it." In an embodiment, the ownership transfer guide UI 1702 may include a device list to be transferred. The second electronic device 530 may receive a user input 1704 accepting the ownership transfer through the ownership transfer guide UI 1702.

Referring to FIG. 17B, the second electronic device 530 may display an ownership transfer processing UI 1712 showing the processing procedure of the ownership transfer based on receiving the user input 1704 accepting the ownership transfer. In an embodiment, the ownership transfer processing UI 1712 may include processing state objects indicating the ownership transfer processing procedure of one or more IoT devices previously registered by the first electronic device 520. In an embodiment, each of the processing state objects may include a device name (e.g., "_device name 0", "_device name 1", "_device name 2", or "_device name 3"), an image, and/or a phrase indicating a processing state (e.g., "Updated", "Update Failed", "Updating", or "Waiting"). Herein, the processing state being "Updated" may indicate that the ownership of the corresponding IoT device (e.g., "_device name 1") has been completely transferred from the first user to the second user.

A second electronic device 530 according to an embodiment may include memory 230 storing instructions, a communication circuit 292, and at least one processor 220 operatively connected to the memory and the communication circuit. The instructions may, when executed by the at least one processor, cause the second electronic device to receive, via the communication circuit, an ownership transfer request message requesting to transfer ownership of an internet of things (IoT) device registered in a server 550 from a first user to a second user. The instructions may, when executed by the at least one processor, cause the second electronic device to receive a user input consenting to the ownership transfer of the IoT device. The instructions may, when executed by the at least one processor, cause the second electronic device to transmit, via the communication circuit, a request message for requesting the ownership transfer of the IoT device to the server based on the user input. The instructions may, when executed by the at least one processor, cause the second electronic device to receive, via the communication circuit, ownership transfer information necessary for processing the ownership transfer of the IoT device from the server after transmitting the request message. The instructions may, when executed by the at least one processor, cause the second electronic device to establish a device-to-device (D2D) connection with the IoT device via the communication circuit based on the ownership transfer information. The instructions may, when executed by the at least one processor, cause the second electronic device to transmit, to the IoT device via the D2D connection, network connection information for being used by the IoT device to connect with the server.

In an embodiment, the ownership transfer request message may be received from a first electronic device related to the first user or from the server.

In an embodiment, the ownership transfer request message may include at least one of a device list to be transferred including the IoT device, or ownership information indicating a right to receive the ownership of the IoT device from the first user.

In an embodiment, the request message may include at least one of the device list to be transferred, or the ownership information.

In an embodiment, the ownership information may include an ownership token indicating a right to receive the ownership of the IoT device from the first user and/or an owner identifier (ID) indicating the first user.

In an embodiment, the ownership transfer information may include at least one of identification information of a first electronic device related to the first user, identification information of the IoT device, an SSID of an access point (AP) related to the IoT device, an owner ID of the IoT device, or media access control (MAC) address information of the IoT device.

In an embodiment, the instructions may cause the second electronic device to scan, through a camera 280 of the second electronic device, a quick response (QR) code including information requesting to transfer ownership of a first IoT device registered in the server from the first user to the second user, transmit, to the server, a first request message for requesting the ownership transfer of the first IoT device based on scanning the QR code, receive, from the server, first ownership transfer information necessary for processing the ownership transfer of the IoT device after transmitting the first request message, establish a first D2D connection with the first IoT device based on the first ownership transfer information, and transmit, to the first IoT device via the first D2D connection, first network connection information for being used by the first IoT device to connect with the server.

In an embodiment, the instructions may cause the second electronic device to transmit, to the server, a query message for querying the existence of an IoT device whose ownership is to be transferred, receive, from the server, a response message indicating that at least one IoT device whose ownership is to be transferred exists, receive a second user input requesting to process the ownership transfer based on receiving the response message, transmit, to the server, a first request message for requesting a device list to be transferred based on the second user input, receive, from the server, a device list to be transferred including a second IoT device based on the first request message, transmit, to the server, a second request message for requesting second ownership transfer information related to the second IoT device, receive, from the server, the second ownership transfer information based on the second request message, establish a second D2D connection with the second IoT device based on the second ownership transfer information, and transmit, to the second IoT device via the second D2D connection, second network connection information for being used by the second IoT device to connect with the server.

A first electronic device 520 according to an embodiment of the disclosure may include memory 230 storing instructions, a communication circuit 292, and at least one processor 220 operatively connected to the memory and the communication circuit. The instructions may, when executed by the at least one processor, cause the first electronic device to receive a user input requesting to transfer ownership of a first IoT device among one or more IoT devices registered in a server 550 for a first user to a second user. The instructions may, when executed by the at least one processor, cause the first electronic device to transmit, via the communication circuit, an ownership transfer notice message including user information of the second user to the server. The instructions may, when executed by the at least one processor, cause the first electronic device to transmit, via the communication circuit, an ownership transfer request message including ownership information indicating a right to receive the ownership of the first IoT device from the first user, to a second electronic device 530 related to the second user.

In an embodiment, the instructions may cause the first electronic device to receive a user input requesting to transfer ownership of a second IoT device among one or more IoT devices registered in the server 550 for the first user to the second user, receive, from the server via the communication circuit, ownership information indicating a right to receive the ownership of the second IoT device from the first user, and display, through a display module 260, a quick response (QR) code including information requesting to transfer the ownership of the second IoT device from the first user to the second user based on the ownership information.

A method by a second electronic device 530 according to an embodiment of the disclosure may include an operation of receiving an ownership transfer request message requesting to transfer ownership of an internet of things (IoT) device registered in a server 550 from a first user to a second user. The method may include an operation of receiving a user input consenting to the ownership transfer of the IoT device. The method may include an operation of transmitting, to the server, a request message for requesting the ownership transfer of the IoT device based on the user input. The method may include an operation of receiving, from the server, ownership transfer information necessary for processing the ownership transfer of the IoT device after transmitting the request message. The method may include an operation of establishing a device-to-device (D2D) connection with the IoT device based on the ownership transfer information. The method may include an operation of transmitting, to the IoT device via the D2D connection, network connection information for being used by the IoT device to connect with the server.

In an embodiment, the ownership transfer request message may be received from a first electronic device related to the first user or from the server.

In an embodiment, the ownership transfer request message may include at least one of a device list to be transferred including the IoT device, or ownership information indicating a right to receive the ownership of the IoT device from the first user.

In an embodiment, the request message may include at least one of the device list to be transferred, or the ownership information.

In an embodiment, the ownership information may include an ownership token indicating a right to receive the ownership of the IoT device from the first user and/or an owner identifier (ID) indicating the first user.

In an embodiment, the ownership transfer information may include at least one of identification information of a first electronic device related to the first user, identification information of the IoT device, an SSID of an access point (AP) related to the IoT device, an owner ID of the IoT device, or media access control (MAC) address information of the IoT device.

In an embodiment, the method may include an operation of scanning, through a camera 280 of the second electronic device, a quick response (QR) code including information requesting to transfer ownership of a first IoT device registered in the server from the first user to the second user, an operation of transmitting, to the server, a first request message for requesting the ownership transfer of the first IoT device based on scanning the QR code, an operation of receiving, from the server, first ownership transfer information necessary for processing the ownership transfer of the IoT device after transmitting the first request message, an operation of establishing a first D2D connection with the first IoT device based on the first ownership transfer information, and an operation of transmitting, to the first IoT device via the first D2D connection, first network connection information for being used by the first IoT device to connect with the server.

In an embodiment, the method may include an operation of transmitting, to the server, a query message for querying the existence of an IoT device whose ownership is to be transferred, an operation of receiving, from the server, a response message indicating that at least one IoT device whose ownership is to be transferred exists, an operation of receiving a second user input requesting to process the ownership transfer based on receiving the response message, an operation of transmitting, to the server, a first request message for requesting a device list to be transferred based on the second user input, an operation of receiving, from the server, a device list to be transferred including a second IoT device based on the first request message, an operation of transmitting, to the server, a second request message for requesting second ownership transfer information related to the second IoT device, an operation of receiving, from the server, the second ownership transfer information based on the second request message, an operation of establishing a second D2D connection with the second IoT device based on the second ownership transfer information, and an operation of transmitting, to the second IoT device via the second D2D connection, second network connection information for being used by the second IoT device to connect with the server.

A method by a first electronic device 520 according to an embodiment of the disclosure may include an operation of receiving a user input requesting to transfer ownership of a first IoT device among one or more IoT devices registered in a server 550 for a first user to a second user. The method may include an operation of transmitting, to the server, an ownership transfer notice message including user information of the second user. The method may include an operation of transmitting, to a second electronic device 530 related to the second user, an ownership transfer request message including ownership information indicating a right to receive the ownership of the first IoT device from the first user.

In an embodiment, the method may include an operation of receiving a user input requesting to transfer ownership of a second IoT device among one or more IoT devices registered in the server 550 for the first user to the second user, an operation of receiving, from the server, ownership information indicating a right to receive the ownership of the second IoT device from the first user, and an operation of displaying, through a display module 260, a quick response (QR) code including information requesting to transfer the ownership of the second IoT device from the first user to the second user based on the ownership information.

In a non-transitory computer-readable storage medium storing one or more programs according to an embodiment of the disclosure, the one or more programs may include instructions configured to, when executed by at least one processor of a second electronic device, cause the second electronic device to: receive an ownership transfer request message requesting to transfer ownership of an internet of things (IoT) device registered in a server from a first user to a second user, receive a user input consenting to the ownership transfer of the IoT device, transmit, to the server, a request message for requesting the ownership transfer of the IoT device based on the user input, receive, from the server, ownership transfer information necessary for processing the ownership transfer of the IoT device after transmitting the request message, establish a device-to-device (D2D) connection with the IoT device based on the ownership transfer information, and transmit, to the IoT device via the D2D connection, network connection information for being used by the IoT device to connect with the server.

In a non-transitory computer-readable storage medium storing one or more programs according to an embodiment of the disclosure, the one or more programs may include instructions configured to, when executed by at least one processor of a first electronic device, cause the first electronic device to: receive a user input requesting to transfer ownership of a first IoT device among one or more IoT devices registered in a server for a first user to a second user, transmit, to the server, an ownership transfer notice message including user information of the second user, and transmit, to a second electronic device related to the second user, an ownership transfer request message including ownership information indicating a right to receive the ownership of the first IoT device from the first user.

While the disclosure has been described and illustrated with reference to various example embodiments, it should be understood that the various example embodiments are for illustration and not limitation. Those skilled in the art will further understand that various changes in form and details may be made without departing from the true spirit and full scope of the disclosure, including the appended claims and equivalents thereof. Further, it should be understood that any of the embodiment(s) described herein may be used together with any other embodiment(s) described herein.

The electronic device according to various embodiments disclosed in the present document may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

The various embodiments of the present document and the terms used herein are not intended to limit the technical features described in the present document to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the present document may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

The various embodiments of the present document may be implemented as software (e.g., the program 240) including one or more instructions stored in a storage medium (e.g., the internal memory 236 or the external memory 238) readable by a machine (e.g., the electronic device 201). For example, a processor (e.g., the processor 220) of the machine (e.g., the electronic device 201) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to an embodiment disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{™}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

## Claims

1. A second electronic device (530), comprising:
memory (230) storing instructions;
a communication circuit (292); and
at least one processor (220) operatively connected to the memory and the communication circuit, wherein the instructions, when executed individually or collectively by the at least one processor, cause the second electronic device to:
receive, via the communication circuit, a first request message requesting to transfer ownership of an internet of things (IoT) device registered in a server (550) from a first user to a second user,
receive a user input consenting to the ownership transfer of the IoT device,
transmit, via the communication circuit, a second request message for requesting the ownership transfer of the IoT device to the server based on the user input,
receive, via the communication circuit, ownership transfer information necessary for processing the ownership transfer of the IoT device from the server after transmitting the second request message,
establish a device-to-device (D2D) connection with the IoT device via the communication circuit based on the ownership transfer information, and
transmit, to the IoT device via the D2D connection, network connection information for being used by the IoT device to connect with the server.

2. The second electronic device of claim 1, wherein the first request message is received from a first electronic device related to the first user or from the server.

3. The second electronic device of claim 1 or 2, wherein the first request message includes at least one of a device list to be transferred including the IoT device, or ownership information indicating a right to receive the ownership of the IoT device from the first user.

4. The second electronic device of claim 3, wherein the second request message includes at least one of the device list to be transferred, or the ownership information.

5. The second electronic device of claim 4, wherein the ownership information includes an ownership token indicating a right to receive the ownership of the IoT device from the first user and/or an owner identifier (ID) indicating the first user.

6. The second electronic device of any one of claims 1 to 5, wherein the ownership transfer information includes at least one of identification information of a first electronic device related to the first user, identification information of the IoT device, an SSID of an access point (AP) related to the IoT device, an owner ID of the IoT device, or media access control (MAC) address information of the IoT device.

7. The second electronic device of any one of claims 1 to 6, wherein the instructions, when executed individually or collectively by the at least one processor, cause the second electronic device to:
scan, through a camera (280) of the second electronic device, a quick response (QR) code including information requesting to transfer ownership of a first IoT device registered in the server from the first user to the second user,
transmit, to the server, a first request message for requesting the ownership transfer of the first IoT device based on scanning the QR code,
receive, from the server, first ownership transfer information necessary for processing the ownership transfer of the IoT device after transmitting the first request message,
establish a first D2D connection with the first IoT device based on the first ownership transfer information, and
transmit, to the first IoT device via the first D2D connection, first network connection information for being used by the first IoT device to connect with the server.

8. The second electronic device of any one of claims 1 to 7, wherein the instructions, when executed individually or collectively by the at least one processor, cause the second electronic device to:
transmit, to the server, a query message for querying the existence of an IoT device whose ownership is to be transferred,
receive, from the server, a response message indicating that at least one IoT device whose ownership is to be transferred exists,
receive a second user input requesting to process the ownership transfer based on receiving the response message,
transmit, to the server, a first request message for requesting a device list to be transferred based on the second user input,
receive, from the server, a device list to be transferred including a second IoT device based on the first request message,
transmit, to the server, a second request message for requesting second ownership transfer information related to the second IoT device,
receive, from the server, the second ownership transfer information based on the second request message,
establish a second D2D connection with the second IoT device based on the second ownership transfer information, and
transmit, to the second IoT device via the second D2D connection, second network connection information for being used by the second IoT device to connect with the server.

9. A first electronic device (520), comprising:
memory (230) storing instructions;
a communication circuit (292); and
at least one processor (220) operatively connected to the memory and the communication circuit, wherein the instructions, when executed individually or collectively by the at least one processor, cause the first electronic device to:
receive a user input requesting to transfer ownership of a first IoT device among one or more IoT devices registered in a server (550) for a first user to a second user,
transmit, via the communication circuit, an ownership transfer notice message including user information of the second user to the server, and
transmit, via the communication circuit, an ownership transfer request message including ownership information indicating a right to receive the ownership of the first IoT device from the first user, to a second electronic device (530) related to the second user.

10. The first electronic device of claim 9, wherein the instructions, when executed individually or collectively by the at least one processor, cause the first electronic device to:
receive a user input requesting to transfer ownership of a second IoT device among one or more IoT devices registered in the server (550) for the first user to the second user,
receive, from the server via the communication circuit, ownership information indicating a right to receive the ownership of the second IoT device from the first user, and
display, through a display module (260), a QR code including information requesting to transfer the ownership of the second IoT device from the first user to the second user based on the ownership information.

11. A method by a second electronic device (530), comprising:
an operation (802) of receiving a first request message requesting to transfer ownership of an internet of things (IoT) device registered in a server (550) from a first user to a second user;
an operation (806) of receiving a user input consenting to the ownership transfer of the IoT device;
an operation (808) of transmitting, to the server, a second request message for requesting the ownership transfer of the IoT device based on the user input;
an operation (810) of receiving, from the server, ownership transfer information necessary for processing the ownership transfer of the IoT device after transmitting the second request message;
an operation (812) of establishing a device-to-device (D2D) connection with the IoT device based on the ownership transfer information; and
an operation (814) of transmitting, to the IoT device via the D2D connection, network connection information for being used by the IoT device to connect with the server.

12. The method of claim 11, wherein the first request message is received from a first electronic device related to the first user or from the server.

13. The method of claim 11 or 12, wherein the first request message includes at least one of a device list to be transferred including the IoT device, or ownership information indicating a right to receive the ownership of the IoT device from the first user,
wherein the second request message includes at least one of the device list to be transferred, or the ownership information, and
wherein the ownership information includes an ownership token indicating a right to receive the ownership of the IoT device from the first user and/or an owner identifier (ID) indicating the first user.

14. The method of any one of claims 11 to 13, wherein the ownership transfer information includes at least one of identification information of a first electronic device related to the first user, identification information of the IoT device, an SSID of an access point (AP) related to the IoT device, an owner ID of the IoT device, or media access control (MAC) address information of the IoT device.

15. A method by a first electronic device (520), comprising:
an operation of receiving a user input requesting to transfer ownership of a first IoT device among one or more IoT devices registered in a server (550) for a first user to a second user;
an operation of transmitting, to the server, an ownership transfer notice message including user information of the second user; and
an operation of transmitting, to a second electronic device (530) related to the second user, an ownership transfer request message including ownership information indicating a right to receive the ownership of the first IoT device from the first user.
